# EUROPÄISCHE PATENTSCHRIFT

(11) **EP 2 422 248 B1**
(45) Veröffentlichungstag und Bekanntmachung des Hinweises auf die Patenterteilung: **11.05.2016**
(21) Anmeldenummer: 10719255.1
(22) Anmeldetag: 20.04.2010
(51) Int. Cl.: G05B 19/418

(54) **SYSTEM UND VERFAHREN ZUM VERTEILEN VON PROJEKTDATEN EINER SICHERHEITSSTEUERUNG EINER AUTOMATISIERTEN ANLAGE AUF DIE STEUERUNGSKOMPONENTEN**
SYSTEM AND METHOD FOR DISTRIBUTING PROJECT DATA OF A SAFETY CONTROLLER OF AN AUTOMATED SYSTEM TO THE CONTROL COMPONENTS
SYSTÈME ET PROCÉDÉ DE RÉPARTITION DE DONNÉES DE PROJETS D'UN CONTROLLEUR DE SÉCURITÉ D'UNE INSTALLATION AUTOMATISÉE AUX COMPOSANTS DE COMMANDE

(30) Priorität: 20.04.2009 DE 102009019096
(43) Veröffentlichungstag der Anmeldung: 29.02.2012
(73) Patentinhaber: Pilz GmbH & Co. KG, 73760 Ostfildern (DE)
(72) Erfinder: REUSCH, Matthias, 72531 Hohenstein (DE); PETZOLD, Karsten, 70374 Stuttgart (DE); KLING, Michael, 73779 Deizisau (DE); SCHIPS, Patrick, 73240 Wendlingen (DE); BANZHAF, Bernd, 70597 Stuttgart (DE); STANKO, Florian, 74372 Sersheim (DE); WALTER, Herbert, 73278 Schlierbach (DE); HEIBER, Timo, 70567 Stuttgart (DE)
(74) Vertreter: Witte, Weller & Partner Patentanwälte mbB
(86) Internationale Anmeldenummer: PCT/EP2010/002438
(87) Internationale Veröffentlichungsnummer: WO 2010/121798

(56) Entgegenhaltungen:
- EP-A1- 1 231 526
- EP-A2- 1 362 269
- DE-A1- 19 906 695
- US-A- 5 699 242
- US-A1- 2004 230 980
- US-B1- 6 170 044

## Beschreibung

Die vorliegende Erfindung betrifft eine Sicherheitssteuerung und ein Verfahren zum Steuern einer automatisierten Anlage in Abhängigkeit von Projektdaten, die eine auf der Anlage ablaufende Anwendung repräsentieren, mit einer Vielzahl von Steuerungshardwarekomponenten, die jeweils einen Projektdatenspeicher und zumindest eine Datenverarbeitungseinheit aufweisen, wobei die Projektdatenspeicher jeweils dazu ausgebildet sind, ihnen jeweils zugeführte Projektdaten zu speichern, mit einer Verbindungseinheit, über die die Steuerungshardwarekomponenten untereinander verbunden sind, und mit einer Verteileinheit, die dazu ausgebildet ist, zumindest einen Teil der Projektdaten über die Verbindungseinheit auf zumindest einen Teil der Projektdatenspeicher zu verteilen, wobei für eine erste Datenverarbeitungseinheit bestimmte Projektdaten in einem ersten Projektdatenspeicher gespeichert sind, der in derjenigen Steuerungshardwarekomponente enthalten ist, in der die erste Datenverarbeitungseinheit enthalten ist.

Eine solche Sicherheitssteuerung und ein entsprechendes Verfahren sind in DE 199 06 695 A1 offenbart.

Eine Sicherheitssteuerung im Sinne der vorliegenden Erfindung ist ein Gerät, oder eine Vorrichtung, das bzw. die von Sensoren gelieferte Eingangssignale aufnimmt und daraus durch logische Verknüpfungen und eventuell weitere Signal- oder Datenverarbeitungsschritte Ausgangssignale erzeugt. Die Ausgangssignale können dann Aktuatoren zugeführt werden, die in Abhängigkeit von den Eingangssignalen Aktionen oder Reaktionen in einer gesteuerten Anlage bewirken.

Ein bevorzugtes Anwendungsgebiet für derartige Sicherheitssteuerungen ist die Überwachung von Not-Aus-Tastem, Zwei-Hand-Steuerungen, Schutztüren oder Lichtgittern im Bereich der Maschinensicherheit. Derartige Sensoren werden verwendet, um beispielsweise eine Maschine, von der im Betrieb eine Gefahr für Menschen oder materielle Güter ausgeht, abzusichern. Beim Öffnen der Schutztür oder beim Betätigen des Not-Aus-Tasters wird jeweils ein Signal erzeugt, das der Sicherheitssteuerung als Eingangssignal zugeführt ist. In Reaktion darauf schaltet die Sicherheitssteuerung dann beispielsweise mit Hilfe eines Aktuators den gefahrbringenden Teil der Maschine ab.

Charakteristisch an einer Sicherheitssteuerung ist im Gegensatz zu einer "normalen" Steuerung, dass die Sicherheitssteuerung selbst dann, wenn bei ihr oder einem mit ihr verbundenen Gerät eine Fehlfunktion auftritt, stets einen sicheren Zustand der gefahrbringenden Anlagen oder Maschinen gewährleistet. Daher werden bei Sicherheitssteuerungen extrem hohe Anforderungen an die eigene Fehlersicherheit gestellt, was einen erheblichen Aufwand bei der Entwicklung und Herstellung zur Folge hat.

In der Regel benötigen Sicherheitssteuerungen vor ihrer Verwendung eine besondere Zulassung durch zuständige Aufsichtsbehörden, wie beispielsweise in Deutschland durch die Berufsgenossenschaften oder den TÜV. Die Sicherheitssteuerung muss dabei vorgegebene Sicherheitsstandards einhalten, die beispielsweise in der europäischen Norm EN 954-1 oder einer vergleichbaren Norm, beispielsweise der Norm IEC 61508 oder der Norm EN ISO 13849-1, niedergelegt sind. Im Folgenden wird daher unter einer Sicherheitssteuerung ein Gerät bzw. eine Vorrichtung verstanden, die zumindest die Sicherheitskategorie 3 der genannten europäischen Norm EN 954-1 erfüllt oder deren Safety Integrity Level (SIL) zumindest die Stufe 2 gemäß der genannten Norm IEC 61508 erreicht.

Eine programmierbare Sicherheitssteuerung bietet dem Anwender die Möglichkeit, die logischen Verknüpfungen und gegebenenfalls weitere Signal- oder Datenverarbeitungsschritte mit Hilfe einer Software, dem so genannten Anwenderprogramm, seinen Bedürfnissen entsprechend individuell festzulegen. Daraus resultiert eine große Flexibilität im Vergleich zu früheren Lösungen, bei denen die logischen Verknüpfungen durch eine definierte Verdrahtung zwischen verschiedenen Sicherheitsbausteinen erzeugt wurden. Ein Anwenderprogramm kann beispielsweise mit Hilfe eines handelsüblichen Personalcomputers (PC) und unter Verwendung entsprechend eingerichteter Softwareprogramme erstellt werden. Der Begriff Anwenderprogramm wird dabei so verstanden, dass ein Anwenderprogramm sowohl Quellcode als auch Maschinencode umfasst.

Bei aus einer Vielzahl von Anlagenhardwarekomponenten aufgebauten großen und somit komplexen Anlagen nach dem Stand der Technik kommen üblicherweise verteilte Sicherheitssteuerungen zum Einsatz. Verteilte Sicherheitssteuerungen bestehen aus einer Vielzahl von Steuerungshardwarekomponenten. Hierbei handelt es sich um Steuereinheiten, Sensoren und Aktuatoren. Die einzelnen Steuerungshardwarekomponenten sind einzelnen Anlagenhardwarekomponenten zugeordnet. Hinsichtlich der Hardware zeichnen sich verteilte Sicherheitssteuerungen durch eine große Flexibilität aus. So kann eine Sicherheitssteuerung aus einer beliebigen Anzahl unterschiedlicher Steuerungshardwarekomponenten aufgebaut und somit sehr flexibel an die Gegebenheiten der zu steuernden Anlage angepasst werden. Hinsichtlich der programmier- bzw. softwaretechnischen Realisierung und somit der Belange der Datenverarbeitung sind verteilte Sicherheitssteuerungen jedoch noch nicht optimal. So ist eine Verteilung von Projektdaten, das sind diejenigen Daten, die eine auf der gesteuerten Anlage ablaufende Anwendung repräsentieren, auf die einzelnen Steuerungshardwarekomponenten nicht vorgesehen. Dadurch wird nicht nur die hinsichtlich der hardwaretechnischen Realisierung mögliche Flexibilität in erheblichem Maße eingeschränkt, dies zieht auch weitere Nachteile nach sich. Bezüglich der Kosten ist von Nachteil, dass in einzelnen Steuerungshardwarekomponenten, insbesondere in intelligenten Sensoren und intelligenten Aktuatoren, eventuell vorhandener freier Speicher, genauer gesagt Datenspeicher, nicht genutzt wird und stattdessen der in Steuereinheiten enthaltene Datenspeicher größer dimensioniert werden muss, als dies eigentlich erforderlich wäre.

Die eingangs genannte DE 199 06 695 A1 offenbart ein Verfahren zur automatischen Dezentralisierung von Programmen in Steuerungseinrichtungen und zur Verteilung von Intelligenz. Bei dem bekannten Steuersystem existieren nur noch dezentrale Einheiten, die sich über ein Bussystem unterhalten. Die dezentralen Einheiten sind in der Lage, Programmteile aufzunehmen, die ansonsten in einer speicherprogrammierbaren Steuerung vorhanden sind. Die Einzelprogramme werden derart verteilt, dass sich die Programmteile danach orientieren, wo ihre jeweiligen Ausgänge physikalisch vorliegen.

US 2004/0230980 A1 offenbart ein dezentrales Steuersystem, bei dem eine Vielzahl von Steuereinheiten und weiteren Geräten an ein Netzwerk angeschlossen sind. Die an das Netzwerk angeschlossenen Steuereinheiten werden automatisch detektiert, und es erfolgt eine Programmzuordnung mit dem Ziel, die Verarbeitungslast möglichst gleichmäßig auf die Steuereinheiten zu verteilen.

US 5,699,242 offenbart ein Steuerungssystem zum Steuern einer Vielzahl von automatischen Arbeitsanlagen zum Durchführen von unterschiedlichen Arten von vordefinierten Bearbeitungen, um verschiedene Arten von Produkten mit funktional gleichen Arbeitseinheiten herzustellen. Das System besitzt eine hierarchische Anordnung von Computern und Steuerungen. Die Bearbeitung der Werkstücke wird lokal von einer jeweiligen Steuerung der Bearbeitungsanlage gesteuert. Die Bearbeitungssteuerungen werden von einer Liniensteuerung geleitet. Mehrere Liniensteuerungen werden von einem Liniencomputer geleitet. Mehrere Liniencomputer erhalten ihre jeweiligen Anweisungen von einem Zentralcomputer. Die Bearbeitungssteuerungen besitzen jeweils einen Datenspeicher mit einem gemeinsamen Speicherbereich, der für die Bearbeitungssteuerungen gemeinsam ist, und mit einem individuellen Speicherbereich. Die Liniensteuerung besitzt einen Datenspeicher zum Speichern von Befehlscodedaten, die bestimmte Arten von Bearbeitungen der Bearbeitungsanlagen angeben. Die Liniensteuerungen sind dazu ausgebildet, die Befehlscodedaten in die Datenspeicher der jeweiligen Bearbeitungssteuerungen zu übertragen.

EP 1 231 526 A1 beschreibt ein System mit vernetzten Steuerungen, die über logische Namen, d.h. über sog. globale Netzwerkvariablen, auf Daten in dem Netzwerk zugreifen können.

US 6,170,044 B1 beschreibt ein System mit zwei redundanten Prozessormodulen, von denen eins ein primäres Prozessormodul und das andere ein sekundäres Prozessormodul ist. Das sekundäre Prozessormodul dient zur Erhöhung der Verfügbarkeit und ist im Ruhezustand, solange das primäre Prozessormodul einen Prozess steuert. Es übernimmt die Aufgabe des primären Prozessormoduls, wenn dieses ausfällt. Dazu werden die Prozessdaten im Speicher des sekundären Prozessmoduls mit den Prozessdaten im Speicher des primären Prozessormoduls synchronisiert.

Es ist eine Aufgabe der vorliegenden Erfindung, eine Sicherheitssteuerung und ein Verfahren der eingangs genannten Art weiterzubilden, um die Kosten für die Realisierung einer Sicherheitssteuerung zu reduzieren.

Diese Aufgabe wird durch eine Sicherheitssteuerung nach Anspruch 1 und ein Verfahren nach Anspruch 12 gelöst.

Der neuen Sicherheitssteuerung und dem neuen Verfahren liegt die Idee zugrunde, in einer Sicherheitssteuerung eine Verteileinheit vorzusehen, die dazu ausgebildet ist, zumindest einen Teil der Projektdaten auf in Steuerungshardwarekomponenten enthaltene Datenspeicher zu verteilen und somit das Verteilen von Projektdaten auf Steuerungshardwarekomponenten, aus denen die Sicherheitssteuerung aufgebaut ist, zu ermöglichen. Somit lassen sich Projektdaten gezielt in einzelnen Datenspeichern, die in verschiedenen Steuerungshardwarekomponenten enthalten sind, abspeichern. Dies ermöglicht auch in sogenannten intelligenten Ein-/Ausgabe-Einheiten Projektdaten abzuspeichern. Hierbei handelt es sich um Sensoren und Aktuatoren, die über Datenverarbeitungseinheiten, beispielsweise Mikroprozessoren, und Datenspeicher verfügen. Dadurch können in einer Sicherheitssteuerung vorhandene Datenspeicher, die ansonsten zu einem Großteil ungenutzt bleiben würden, mit Projektdaten belegt und somit genutzt werden. Dadurch können in einer Sicherheitssteuerung vorhandene Steuereinheiten zukünftig mit kleineren Datenspeichern ausgestattet werden. Dies reduziert die Kosten für eine Sicherheitssteuerung.

Gleichzeitig wird die Reaktionszeit einer Sicherheitssteuerung verringert. Projektdaten können dort abgespeichert werden und stehen somit dort zur Verfügung, wo beispielsweise benötigte Sensorsignale vorliegen oder Ansteuersignale für Aktuatoren bereitzustellen sind. Dadurch reduziert sich der Datenaustausch, was letztlich zu einer Verringerung der Reaktionszeit führt. Die Reduzierung des Datenaustausches führt zudem zu einer Steigerung der Verfügbarkeit der Sicherheitssteuerung. Da weniger Daten auszutauschen sind, treten auch weniger Datenübertragungsfehler auf.

Dieses Prinzip der lokalen Datenhaltung, bei dem die Projektdaten dort gespeichert werden, wo sie verarbeitet werden, ermöglicht eine schnelle und besonders effektive Bearbeitung von Steuerungsaufgaben und somit eine Reduzierung der Reaktionszeit einer Sicherheitssteuerung. Bei einer Datenverarbeitungseinheit kann es sich um eine Einheit handeln, der Daten als Eingangsdaten für eine Operation zugeführt werden und die als Ergebnis dieser Operation in Abhängigkeit der Eingangsdaten ermittelte Ausgangsdaten ausgibt. Unter einer Datenverarbeitungseinheit kann aber auch eine Einheit verstanden werden, der Daten dahingehend zugeführt werden, diese an eine andere Einheit weiterzuleiten. Sicherheitssteuerungen enthalten Datenverarbeitungseinheiten in unterschiedlichster Ausgestaltungsform. So kommen beispielsweise datenbasierte Nachrichtenvermittlungseinheiten zum Einsatz. Diese stellen beispielsweise von der eigenen Steuereinheit erzeugte Daten anderen Steuereinheiten zur Verfügung und lesen von anderen Steuereinheiten erzeugte Daten ein, die in der eigenen Steuereinheit zur weiteren Verarbeitung benötigt werden. Solche Datenverarbeitungseinheiten sind unter der Bezeichnung Databroker bekannt. Auch kann es sich um ereignisbasierte Nachrichtenvermittlungseinheiten handeln. Solche Nachrichtenvermittlungseinheiten versenden ein Signal, wenn in der eigenen Steuereinheit eine definierte Bedingung erfüllt ist, um in einer anderen Steuereinheit bzw. in der zu steuernden Anlage eine definierte Reaktion auszulösen. In entsprechender Weise empfangen solche Nachrichtenvermittlungseinheiten auch solche Signale. Solche Nachrichtenvermittlungseinheit sind unter der Bezeichnung Eventbroker bekannt. Des Weiteren kommen auch Verbindungseinheiten zum Einsatz, die benötigt werden, um überhaupt einen Datenaustausch zwischen einzelnen Steuerungshardwarekomponenten zu ermöglichen. Solche Datenverarbeitungseinheiten werden als Datenbusschnittstellen bezeichnet. Darüber hinaus handelt es sich auch bei einem Projektdatenspeicher um eine Datenverarbeitungseinheit, da der Projektdatenspeicher nicht nur Projektdaten speichern sondern auch Projektdaten anfordern und weiterleiten kann. Je nachdem, wie die Datenverarbeitungseinheit ausgestaltet ist, unterscheiden sich die für die Datenverarbeitungseinheit jeweils gespeicherten Projektdaten. Für einen Databroker, einen Eventbroker oder eine Datenbusschnittstelle werden beispielsweise Konfigurationsdaten und Parametrierungsdaten abgespeichert. Für einen Projektdatenspeicher werden neben Parametrierungsdaten und Konfigurationsdaten auch Projektdaten abgespeichert, vorzugsweise diejenigen Projektdaten, die in der Steuereinheit verarbeitet werden, in der der Projektdatenspeicher enthalten ist.

Das Verteilen und somit Abspeichern von Projektdaten in mehreren Projektdatenspeichern hat zudem hinsichtlich der Realisierung und Handhabe einer Sicherheitssteuerung Vorteile. Wird beispielsweise nach der Projektierung einer Sicherheitssteuerung im Probebetrieb festgestellt, dass die in der Sicherheitssteuerung vorhandene, durch sämtliche Datenspeicher gebildete Speicherkapazität zu gering ausfällt, so kann diese durch Einfügen einer zusätzlichen Steuerungshardwarekomponente, die über einen Datenspeicher verfügt, vergrößert werden. Die Projektdaten können dann auf die bisherigen und den zusätzlichen Datenspeicher neu verteilt werden. Die Sicherheitssteuerung ist somit beliebig skalierbar.

Ist zudem der in einer Steuerungshardwarekomponente enthaltene Datenspeicher beispielsweise als eine entnehmbare Speicherkarte ausgebildet, so können bei einem gegebenenfalls erforderlichen Geräteaustausch die für die neue Steuerungshardwarekomponente benötigten Projektdaten in einfacher Art und Weise bereitgestellt werden. Aus der zu entfernenden defekten Steuerungshardwarekomponente ist lediglich die Speicherkarte zu entnehmen und in die neue einzufügende Steuerungshardwarekomponente einzusetzen. Somit lassen sich beispielsweise Adressdaten, Konfigurationsdaten und Programmdaten bereitstellen, ohne dass hierfür beispielsweise ein Notebook an die neue Steuerungshardwarekomponente anzuschließen ist.

Die oben genannte Aufgabe ist daher vollständig gelöst.

In einer weiteren Ausgestaltung handelt es sich bei der Verteileinheit um einen der Projektdatenspeicher.

Diese Maßnahme besitzt den Vorteil, dass für das Verteilen der Projektdaten keine zusätzliche Einheit in der Sicherheitssteuerung vorzusehen ist. Das Verteilen der Projektdaten wird von einem der ohnehin in der Sicherheitssteuerung vorhandenen Projektdatenspeicher durchgeführt. Dies ermöglicht eine kostengünstige Realisierung der Sicherheitssteuerung. Ein weiterer Vorteil besteht darin, dass in einem Projektdatenspeicher vorhandene und hinsichtlich einer Verarbeitung von Projektdaten optimierte Funktionalitäten für das Verteilen der Projektdaten verwendet werden können. Als Beispiel sei das Interface eines Projektdatenspeichers angeführt. Demjenigen Projektdatenspeicher, der als Verteileinheit eingesetzt wird, kommt beim Verteilen der Projektdaten die Funktion eines Masters zu. Die restlichen Projektdatenspeicher nehmen jeweils die Funktion eines Slaves ein. Vorteilhafterweise verfügt derjenige Projektdatenspeicher, der als Verteileinheit eingesetzt wird, über eine größere Speicherkapazität, als dies für den Betrieb derjenigen Steuerungshardwarekomponente, in der er angeordnet ist, erforderlich wäre. Und zwar aus folgendem Grund: Beim Verteilen der Projektdaten werden Daten erzeugt, die für den späteren Betrieb der Sicherheitssteuerung benötigt werden. Diese können somit in besagtem Projektdatenspeicher zwischengespeichert werden.

Üblicherweise werden die Projektdaten unter Verwendung eines auf einer Programmiereinheit ablaufenden Programmiertools erstellt. Dabei handelt es sich in der Regel um eine von der Sicherheitssteuerung baulich getrennte Einheit. Die Programmiereinheit umfasst beispielsweise einen als Personalcomputer ausgebildeten Computer. Für die Übertragung der Projektdaten von der Programmiereinheit auf denjenigen Projektdatenspeicher, der als Verteileinheit eingesetzt wird, sind mehrere Alternativen denkbar. So kann die Programmiereinheit beispielsweise über ein Kabel mit derjenigen Steuerungshardwarekomponente, in der der Projektdatenspeicher enthalten ist, oder gar mit dem Projektdatenspeicher selbst verbunden werden. Diese Ausgestaltung eignet sich besonders dafür, wenn die vollständigen Projektdaten in einem einzigen Vorgang in die Sicherheitssteuerung eingespielt werden sollen. In einer weiteren Ausgestaltung können die Projektdaten unter Verwendung eines mobilen Speichermediums auf den Projektdatenspeicher übertragen werden. Als mobiles Speichermedium kommen beispielsweise Speicherkarten, die als SD-Card (Secure Digital Memory Card) oder CF-Card (Compact Flash Card) ausgebildet sein können, oder ein USB-Stick (Universal Serial Bus) in Frage. Bei der Verwendung eines mobilen Speichermediums ist für die Initialisierung des Verteilvorgangs vorteilhafterweise eine bewusste Benutzerhandlung vorzunehmen. Beispielsweise ist an derjenigen Steuerungshardwarekomponente, in die das mobile Speichermedium eingeführt ist, eine bestimmte Tastenkombination zu drücken oder ein Taster zu betätigen oder über eine grafische Oberfläche eine definierte Eingabe vorzunehmen. Bei der direkten Übertragung der Projektdaten von der Programmiereinheit auf den Projektdatenspeicher wird der Verteilvorgang vorteilhafterweise durch die Programmiereinheit automatisch initialisiert.

Die Verwendung eines mobilen Speichermediums hat verschiedene Vorteile. So ist es möglich, Projektdaten lediglich auf ausgewählte Steuerungshardwarekomponenten aufzuspielen, indem das mobile Speichermedium gezielt an diese Steuerungshardwarekomponenten angeschlossen wird. Ein weiterer Vorteil besteht darin, dass das mobile Speichermedium auch zu Sicherungszwecken verwendet werden kann. So kann der in einer Sicherheitssteuerung gespeicherte Maschinencode auf dem mobilen Speichermedium gespeichert und bei Bedarf erneut in die Sicherheitssteuerung eingelesen werden.

In einer weiteren Ausgestaltung der Erfindung handelt es sich bei der Verteileinheit um eine externe Verteileinheit, die zumindest zeitweise an eine in der Sicherheitssteuerung hierfür vorgesehene Schnittstelle angeschlossen ist.

Besonders vorteilhaft ist es, wenn sich die externe Verteileinheit in der Programmiereinheit befindet, auf der das Programmiertool läuft, mit dem die Projektdaten erstellt werden. Dadurch können die Projektdaten direkt von der Programmiereinheit auf die Sicherheitssteuerung übertragen werden. Dies ist zum einen wenig aufwendig. Zum anderen wird dadurch die Fehlersicherheit der Sicherheitssteuerung erhöht, da potentielle Fehlerquellen hinsichtlich der Übertragung der Projektdaten ausgeschlossen werden. Ein weiterer Vorteil dieser Ausgestaltung besteht darin, dass nach Fertigstellen der Projektdaten in einem so genannten Probetrieb, bei dem die Funktionalität der Sicherheitssteuerung und der zu steuernden Anlage getestet wird, und bei dem gegebenenfalls festgestellt wird, dass Änderungen an den Projektdaten vorzunehmen sind, diese in einfacher Art und Weise aktualisiert werden können.

Die Übertragung der Projektdaten von der Programmiereinheit auf die Sicherheitssteuerung erfolgt beispielsweise Kabel gebunden. Vorteilhafterweise ist dabei die Programmiereinheit nicht permanent, sondern nur zeitweise mit der Sicherheitssteuerung verbunden. Beispielsweise für den Zeitraum des Programmierens, also für den Zeitraum, in dem die Projektdaten generiert werden. Oder gar nur für den Zeitraum, während dem die Projektdaten von der Programmiereinheit auf die Sicherheitssteuerung übertragen werden. Die Programmiereinheit kann als Teil der Sicherheitssteuerung aufgefasst werden, da mit Programmiereinheit die Projektdaten, insbesondere das Anwenderprogramm für die zu steuernde Anlage generiert werden.

In einer weiteren Ausgestaltung der Erfindung ist zumindest einer der Projektdatenspeicher ferner dazu ausgebildet, ihm zugeführte Projektdaten an zumindest einen anderen Projektdatenspeicher weiterzuleiten oder in einem anderen Projektdatenspeicher gespeicherte Projektdaten anzufordern.

Diese Maßnahme ermöglicht eine flexible Verteilung der Projektdaten auf die in einer Sicherheitssteuerung enthaltenen Projektdatenspeicher. Dadurch, dass einer der Projektdatenspeicher dazu ausgebildet ist, Projektdaten weiterzuleiten, kann dieser für das Verteilen der Projektdaten auf die in einer Sicherheitssteuerung angeordneten Projektdatenspeicher eingesetzt werden. Dadurch dass zumindest einer der Projektdatenspeicher dazu ausgebildet sind, Projektdaten von einem anderen Projektdatenspeicher anzufordern, ist es nicht zwingend erforderlich, die in einer Steuerungshardwarekomponente benötigten Projektdaten auf demjenigen Projektdatenspeicher abzuspeichern, der in dieser Komponente angeordnet ist. Stattdessen ist es möglich, diese Projektdaten auf einem beliebigen Projektdatenspeicher abzuspeichern, da diese jederzeit angefordert werden können. Vorteilhafterweise ist zumindest einer der Projektdatenspeicher mit beiden Funktionsmerkmalen ausgestattet, d.h. dazu ausgebildet, sowohl Projektdaten weiterzuleiten als auch Projektdaten anzufordern. Dies ermöglicht eine besonders flexible Verteilung der Projektdaten. Ein Projektdatenspeicher, der dazu ausgebildet ist, Projektdaten zu speichern, weiterzuleiten und anzufordern, kann aufgrund dieses Funktionsumfanges auch als Projektdatenserver, verkürzt als Projektserver bezeichnet werden.

In einer weiteren Ausgestaltung der Erfindung handelt es sich bei den Steuerungshardwarekomponenten um Steuereinheiten und/oder Sensoren und/oder Aktuatoren. Es können somit nicht nur die in Steuereinheiten vorhandenen Speicher als Projektdatenspeicher verwendet werden, sondern auch die in so genannten intelligenten Sensoren und intelligenten Aktuatoren vorhandenen Speicher. Dies ermöglicht eine besonders flexible Verteilung der Projektdaten, insbesondere dahingehend, dass direkt vor Ort eine teilumfängliche Verarbeitung der Projektdaten erfolgen kann. Dies trägt dazu bei, die Reaktionszeit der Sicherheitssteuerung zu verbessern.

In einer weiteren Ausgestaltung der Erfindung sind die Projektdaten in eine Vielzahl von Datenpaketen aufgeteilt, wobei die einzelnen Datenpakete jeweils zumindest einem der Projektdatenspeicher zugeordnet sind.

Diese Maßnahme hat den Vorteil, dass die Projektdaten entsprechend einem bestimmten Verteilkriterium gezielt einzelnen Projektdatenspeichem zugewiesen werden können. Somit kann eine Sicherheitssteuerung durch entsprechende Wahl des Verteilkriteriums hinsichtlich unterschiedlicher Parameter optimiert werden.

In einer weiteren Ausgestaltung der Erfindung ist für das Erstellen der Projektdaten eine Programmiereinheit vorgesehen, wobei die Programmiereinheit dazu ausgebildet ist, Zuordnungsdaten zu erzeugen, wobei die Verteileinheit ferner dazu ausgebildet ist, die Projektdaten in Abhängigkeit der Zuordnungsdaten auf die Projektdatenspeicher zu verteilen.

Diese Maßnahme hat den Vorteil, dass die Projektdaten nach einem beliebig festlegbaren Verteilkriterium auf die einzelnen Projektdatenspeicher verteilt werden können. Gleichzeitig wird dadurch eine fehlerfreie und, sofern erforderlich, beliebig oft reproduzierbare Verteilung der Projektdaten gewährleistet. Was die Verbindlichkeit der Zuordnungsdaten angeht, so sind unterschiedliche Ansätze denkbar. Beispielsweise können die Zuordnungsdaten den Charakter eines Vorschlages haben und eine Präferenzliste darstellen, die beispielsweise der Ersteller der Projektdaten oder der Betreiber der zu steuernden Anlage abändern kann. Andererseits kann auch vorgesehen sein, dass eine Abänderung der Zuordnungsdaten nicht möglich ist, so dass in diesem Fall das Verteilen der Projektdaten vollständig automatisch abläuft.

Die Zuordnungsdaten können beispielsweise folgende Angaben enthalten: Für jeden in der Sicherheitssteuerung enthaltenen Projektdatenspeicher sind die auf diesem abzuspeichernden bzw. die dann auf diesem abgespeicherten Datenpakete aufgeführt. Somit steht fest, welches Datenpaket zu welcher Steuerungshardwarekomponente bzw. zu welcher Datenverarbeitungseinheit gehört. Auch kann durch die Zuordnungsdaten die Reihenfolge der Projektdatenspeicher festgelegt sein, in der diese beim Verteilen der Projektdaten berücksichtigt werden. Solch eine Reihenfolge sieht vor, dass auf jeden Fall der Projektdatenspeicher zuerst berücksichtigt wird, der als Verteileinheit eingesetzt wird. Die Zuordnungsdaten können für jeden einzelnen Projektdatenspeicher eine Information darüber enthalten, welche Datenpakete auf dem jeweiligen Projektdatenspeicher abzuspeichern sind bzw. auf diesem dann abgespeichert sind. Darüber hinaus kann für jede Steuerungshardwarekomponente eine Information vorgesehen sein, die angibt, auf welchen Projektdatenspeichern sich die Projektdaten der jeweiligen Steuerungshardwarekomponente befinden. Diese Information wird beispielsweise beim Booten oder Rekonfigurieren der Sicherheitssteuerung benötigt. Liegt diese Information vor, kann jede Steuerungshardwarekomponente bzw. jede Datenverarbeitungseinheit die für sie vorgesehenen Projektdaten von den entsprechenden Projektdatenspeichern, in denen diese gespeichert sind, abrufen. Es ist auch denkbar, einen Teilumfang der Zuordnungsdaten erst beim Verteilvorgang selbst zu erzeugen. Dies bietet sich beispielsweise für die Daten an, angeben, auf welchen Projektdatenspeichern sich die Projektdaten der jeweiligen Steuerungshardwarekomponente befinden.

In einer weiteren Ausgestaltung der Erfindung ist die Programmiereinheit dazu ausgebildet, die Zuordnungsdaten in Abhängigkeit zumindest einer Datenverarbeitungskenngröße zu ermitteln.

Die Datenverarbeitungskenngröße repräsentiert dabei eine für die Datenverarbeitung relevante Kenngröße einer bei der Datenverarbeitung eingesetzten Komponente. Hierbei kann es sich beispielsweise um die Taktfrequenz eines Mikroprozessors, um die Datenraten eines Databroker oder eines Eventbroker oder einer Datenbusschnittstelle oder um die Speicherkapazität eines Projektdatenspeichers handeln. Werden bei der Ermittlung der Zuordnungsdaten Datenverarbeitungskenngrößen der Steuerungshardwarekomponenten oder einzelner in diesen verbauten Einheiten berücksichtigt, so kann eine Verteilung der Projektdaten unter dem Gesichtspunkt einer optimierten Datenverarbeitung erfolgen. So können Projektdaten, zu deren Verarbeitung eine hohe Rechenleistung erforderlich ist, beispielsweise in Steuerungshardwarekomponenten gespeichert werden, die mit einem leistungsfähigen Mikroprozessor ausgestattet sind. Zudem können Datenpakete in Abhängigkeit deren Größe auf die in der Sicherheitssteuerung vorhandenen Datenspeicher verteilt werden. Beispielsweise können kleine Datenpaketen gezielt in Datenspeichern mit geringer Speicherkapazität abgespeichert werden. Diese Maßnahme eignet sich besonders vorteilhaft für eine vollständig automatische Verteilung der Projektdaten auf die Projektdatenspeicher.

In einer weiteren Ausgestaltung der Erfindung ist die Programmiereinheit dazu ausgebildet, die Zuordnungsdaten in Abhängigkeit zumindest einer Funktionszuordnungsgröße zu ermitteln.

Die Funktionszuordnungsgröße repräsentiert dabei für ein einzelnes Datenpaket oder einen Verbund von Datenpaketen denjenigen Projektdatenspeicher, in dem dieses Datenpaket oder dieser Verbund abzuspeichern ist. Der Projektdatenspeicher ist dabei dadurch festgelegt, dass das Abspeichern in demjenigen Projektdatenspeicher erfolgen soll, der sich in derjenigen Steuerungshardwarekomponente, insbesondere derjenigen Steuereinheit, befindet, in der die Projektdaten verarbeitet werden. Beispielsweise aufgrund der räumlichen Nähe eines Sensors, dessen Signale als Eingangssignale benötigt werden, und/oder der räumlichen Nähe eines Aktuators, der durch die ermittelten Ansteuersignale angesteuert wird. Diese Maßnahme ermöglicht eine kurze Reaktionszeit der Sicherheitssteuerung, da die Projektdaten vor Ort vorgehalten werden und somit der Datenaustausch zwischen einzelnen Steuerungshardwarekomponenten auf ein Minimum reduziert wird. Vorteilhafterweise werden die Funktionszuordnungsgrößen vom Programmierer eines Anwenderprogramms vorgegeben, indem er festlegt, welche Umfänge des Anwenderprogramms auf welchen Steuerungshardwarekomponenten, beispielsweise Steuereinheiten, ablaufen sollen.

In einer weiteren Ausgestaltung der Erfindung ist zumindest ein Teil der Projektdaten redundant in den Projektdatenspeichern gespeichert.

Das redundante Abspeichern der Datenpakete wird dadurch erreicht, dass die jeweiligen Datenpakete gedoppelt werden. Die gedoppelten Datenpakete werden dann eigenständig auf die Projektdatenspeicher verteilt, und zwar unter der Maßgabe, dass das ursprüngliche und das gedoppelte Datenpaket jeweils in einem anderen Projektdatenspeicher gespeichert werden. Diese Maßnahme hat den Vorteil, dass die Verfügbarkeit der Sicherheitssteuerung und somit der gesteuerten Anlage erhöht wird. Fällt beispielsweise eine nicht-sicherheitsrelevante Steuerungshardwarekomponente aus, so stehen nach wie vor die Projektdaten, die in ihrem Projektdatenspeicher gespeichert waren, zur Verfügung, da diese noch in einem anderen Projektdatenspeicher vorliegen. Auch wird dadurch der Austausch einer defekten Steuerungshardwarekomponente erleichtert. Es ist lediglich die defekte Komponente gegen eine neue Komponente auszutauschen. Die für die neue Komponente benötigen Projektdaten können beispielsweise automatisch von den jeweiligen Projektdatenspeichern, auf denen diese noch abgelegt sind, angefordert und in dem Projektdatenspeicher der neuen Komponente gespeichert werden. Das redundante Speichern der Projektdaten ermöglicht auch eine Parallelisierung einzelner Steuerungsaufgaben.

In einer weiteren Ausgestaltung der Erfindung umfassen die Projektdaten Programmdaten und/oder Konfigurationsdaten und/oder Parametrisierungsdaten.

Die Programmdaten repräsentieren dabei das Anwenderprogramm und werden beim Erstellen des Anwenderprogramms erzeugt. Die Konfigurationsdaten repräsentieren einzelne Teilaspekte der Datenübertragung. Es handelt sich dabei beispielsweise um eine Zykluszeit, um Verknüpfungsdaten, die festlegen, welche der Steuerungshardwarekomponenten untereinander verbunden sind, oder um Daten, die repräsentieren, welche Sensoren bzw. Aktuatoren welchen Eingängen bzw. Ausgängen einzelner Steuereinheiten zugeordnet sind, oder um Daten, die die zwischen einzelnen Steuerungshardwarekomponenten auszutauschenden Daten beispielsweise in ihrer Art festlegen. Es handelt sich somit um Daten, die die Konfiguration der verteilt realisierten Sicherheitssteuerung repräsentieren. Die Konfigurationsdaten können beim Erstellen des Anwenderprogramms erzeugt werden. Sie können aber auch nach Erstellen des Anwenderprogramms in einem gewissen Umfang erzeugt oder verändert werden. Die Parametrisierungsdaten repräsentieren Wertebereiche für einzelne im Anwenderprogramm verwendete Variablen oder Funktionalitäten. Diese Daten können beim Erstellen des Anwenderprogramms festgelegt werden oder aber zu einem späteren Zeitpunkt erzeugt werden. Diese Maßnahme ermöglicht eine besonders effektive Optimierung der Sicherheitssteuerung hinsichtlich der Rechenleistung oder der Reaktionszeit. So können Programmdaten dort abgespeichert werden, wo deren Verarbeitung erfolgt. Konfigurationsdaten und Parametrisierungsdaten können dort abgespeichert werden, wo diejenigen Einheiten verbaut sind, für die diese bestimmt sind.

In einer weiteren Ausgestaltung der Erfindung ist zumindest ein Teil der Projektdatenspeicher dazu ausgebildet, die jeweils zugeführten Projektdaten nullspannungssicher zu speichern.

Diese Maßnahme hat den Vorteil, dass die Projektdaten beispielsweise nach einem Spannungsausfall oder nach Abschalten der Sicherheitssteuerung nach wie vor vorliegen. Dadurch wird die Verfügbarkeit der Sicherheitssteuerung erhöht. Es ist keine Neuinitialisierung der Sicherheitssteuerung erforderlich. Beispielsweise werden hierfür Speicherkarten in Form von SD-Cards oder CF-Cards verwendet oder aber Flashspeicher eingesetzt.

Vorzugsweise kann während des Verteilens der Projektdaten auf die einzelnen Projektdatenspeicher der Fortgang des Verteilvorgangs durch grafische Mittel angezeigt werden. Dadurch kann sich beispielsweise ein Betreiber der zu steuernden Anlage in einfacher Art und Weise über den Zustand des Verteilvorgangs informieren.

Vorzugsweise enthält jede Steuerungshardwarekomponente einen Projektdatenspeicher. Dies ermöglicht eine optimale Verteilung der Projektdaten. Die Projektdaten stehen an den Orten zur Verfügung, an denen sie benötigt werden.

Die auf der zu steuernden Anlage ablaufende Anwendung kann auch als Prozess bezeichnet werden, der sowohl Standardsteuerungsaufgaben als auch Sicherheitssteuerungsaufgaben umfasst.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer zu steuernden Anlage;
- Fig. 2: eine schematische Darstellung von an einer Anlagenhardwarekomponente angeordneten Steuerungshardwarekomponenten;
- Fig. 3: eine vereinfachte Darstellung von in der neuen Sicherheitssteuerung vorhandenen Projektdatenspeichern;
- Fig. 4: eine vereinfachte Darstellung einer grafischen Oberfläche für das Erstellen von Projektdaten;
- Fig. 5: ein vereinfachtes Flussdiagramm zur Erläuterung des neuen Verfahrens; und
- Fig. 6: ein vereinfachtes Flussdiagramm zur Erläuterung der Bereitstellung von Projektdaten.

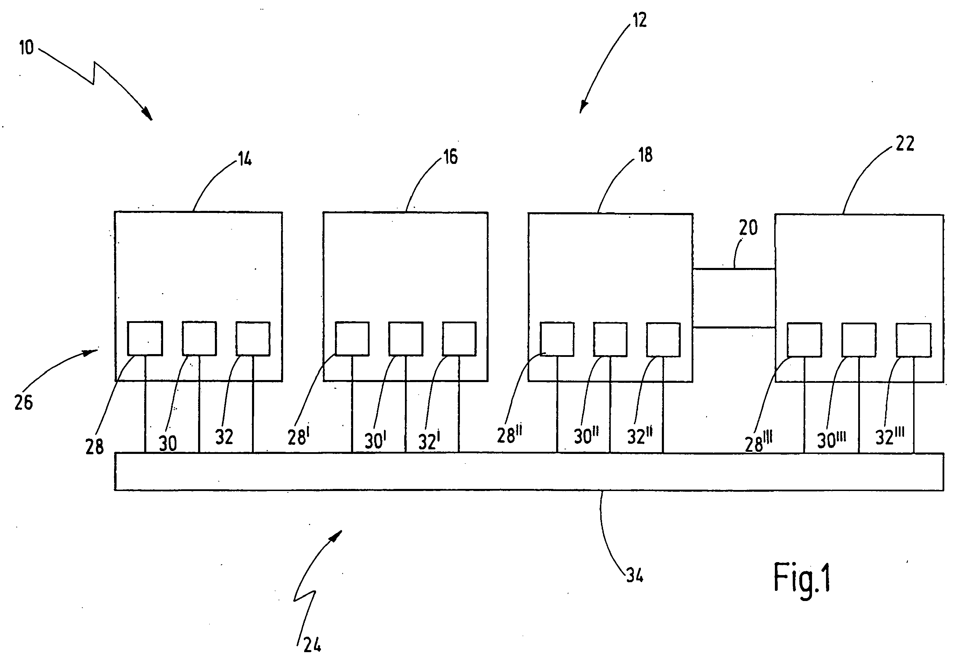

In Fig. 1 ist eine zu steuernde Anlage in ihrer Gesamtheit mit der Bezugsziffer 10 bezeichnet.

Die Anlage 10 besteht aus einer Vielzahl von Anlagenhardwarekomponenten 12. Im vorliegenden Ausführungsbeispiel handelt es sich um eine Bestückungsstation 14, eine Bearbeitungsstation 16, eine Teststation 18, eine Fördereinheit 20 und um eine Verpackungs- und Palettierstation 22. Des Weiteren ist eine Sicherheitssteuerung in ihrer Gesamtheit mit der Bezugsziffer 24 bezeichnet. Die Sicherheitssteuerung 24 beinhaltet eine Vielzahl von Steuerungshardwarekomponenten 26. Bei den Steuerungshardwarekomponenten 26 handelt es sich um Steuereinheiten 28, Sensoren 30 und Aktuatoren 32. Dabei sind die einzelnen Steuereinheiten 28, Sensoren 30 und einzelnen Aktuatoren 32 jeweils einer der Anlagenhardwarekomponenten 12 zugeordnet und räumlich dort angeordnet. Die Steuerungshardwarekomponenten 12 sind über eine Verbindungseinheit 34 untereinander verbunden. Bei der Verbindungseinheit 34 handelt es sich um einen Datenbus, der beispielsweise als Ethernetbasierter Feldbus ausgebildet ist. Vorzugsweise kommt ein Datenbussystem zum Einsatz, welches nach dem auf die Anmelderin zurückgehenden SafetyNET p ® - Kommunikationsmodell arbeitet.

Mit der Bestückungsstation 14 wird die Bearbeitungsstation 16 mit Werkstücken befüllt. Diese Werkstücke werden in der Bearbeitungsstation 16 bearbeitet. Anschließend werden die bearbeiteten Werkstücke von der Bearbeitungsstation 16 an die Teststation 18 weitergegeben, in der überprüft wird, ob das bearbeitete Werkstück entsprechende Prüfkriterien erfüllt. Sind diese Prüfkriterien erfüllt, kann die Bearbeitungsstation 16 wieder mit einem neuen Werkstück befüllt werden. Das bearbeitete Werkstück wird mittels der Fördereinheit 20 an die Verpackungs- und Palettierstation 22 übergeben. In dieser werden mehrere bearbeitete Werkstücke zu Gebinden zusammengefasst, die dann auf einer Palette gestapelt werden.

Die Arbeitsbereiche der einzelnen Stationen 14, 16, 18, 22 können beispielsweise durch Schutztüren gesichert sein, die mit Sicherheitsschaltern ausgestattet sind, durch die sich eine Zuhaltung mit Verriegelung realisieren lässt. Alternativ oder ergänzend können auch Lichtgitter oder Lichtvorhänge eingesetzt werden. Darüber hinaus können die einzelnen Stationen 14, 16, 18, 22 mit Not-Aus-Tastern versehen sein, mit denen die jeweilige Station durch Trennen von der Stromversorgung in einen sicheren Zustand überführt werden kann. Hierfür werden Schütze entsprechend angesteuert. Bei den vorstehend genannten Schutztüren, Lichtgittern, Lichtvorhängen und Not-Aus-Tastern handelt es sich um sicherheitsrelevante Sensoren, die in den Sensoren 30 enthalten sind. Bei den Schützen handelt es sich um sicherheitsrelevante Aktuatoren, die in den Aktuatoren 32 enthalten sind. Die Sensoren 30 können des Weiteren nicht-sicherheitsrelevante Sensoren umfassen. Dies sind Sensoren, die Betriebsgrößen erfassen, beispielsweise für eine Antriebs- oder Positionsregelung benötigte Eingangsgrößen, wie Drehzahlen, Winkel oder Geschwindigkeiten. Die Aktuatoren 32 können auch nicht-sicherheitsrelevante Aktuatoren umfassen. Hierbei kann es sich beispielsweise um Motoren oder Stellzylinder handeln.

Im vorliegenden Ausführungsbeispiel ist jeder Station 14, 16, 18, 22 eine Steuereinheit 28 zugeordnet. Hierfür sind die Steuereinheiten 28 als baulich eigenständige Komponenten ausgebildet. Dies gilt ebenso für die Sensoren 30 und die Aktuatoren 32. Dies soll jedoch keine einschränkende Wirkung haben. Es ist auch denkbar, beispielsweise zwei Stationen eine gemeinsame Steuereinheit zuzuordnen. Die einzelnen Anlagenhardwarekomponenten können baulich und räumlich voneinander getrennt sein. Es ist aber auch denkbar, dass einzelne dieser Komponenten operativ miteinander verbunden sind.

In Fig. 1 sind funktionsgleiche Komponenten mit derselben Bezugsziffer versehen, wobei durch die Verwendung von Strichen angedeutet ist, dass die einzelnen Komponenten derselben Bezugsziffer aufgrund der individuellen Zuordnung zu einzelnen Anlagenhardwarekomponenten durchaus unterschiedlich ausgestaltet sein können. Entsprechendes gilt auch für Signale. Diese Form der Kennzeichnung gilt auch für die weiteren Figuren.

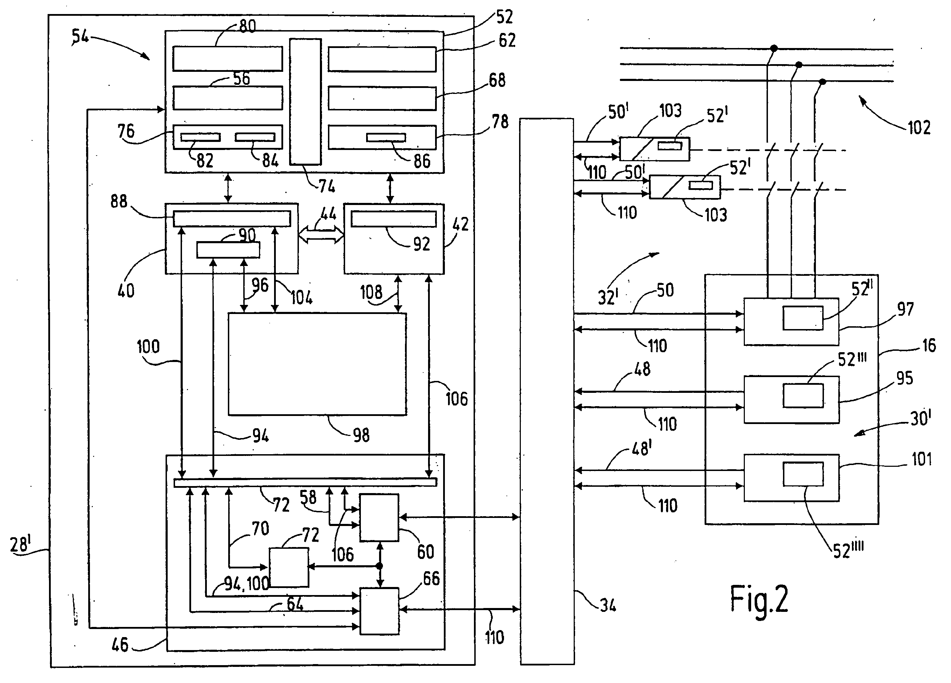

In Fig. 2 sind in einer detaillierteren Darstellung die Bearbeitungsstation 16 und die ihr zugeordneten Steuerungshardwarekomponenten dargestellt. Hierbei handelt es sich um die Steuereinheit 28', die Sensoren 30' und die Aktuatoren 32', die durch die Verbindungseinheit 34 untereinander verbunden sind.

Die Steuereinheit 28' ist zweikanalig-redundant aufgebaut, um die erforderliche Fehlersicherheit zum Steuern sicherheitskritischer Anwendungen bzw. Prozesse zu erreichen. Stellvertretend für den zweikanaligen Aufbau sind in Fig. 2 zwei voneinander getrennte Prozessoren, nämlich ein erster Prozessor 40 und ein zweiter Prozessor 42, dargestellt. Die beiden Prozessoren 40, 42 stehen über eine bidirektionale Kommunikationsschnittstelle 44 miteinander in Verbindung, um sich gegenseitig überwachen und Daten austauschen zu können. Bevorzugt sind die beiden Kanäle der Steuereinheit 28' und die beiden Prozessoren 40, 42 diversitär, d.h. verschieden voneinander, aufgebaut, um systematische Fehler weitgehend auszuschließen.

Mit der Bezugsziffer 46 ist eine Ein-/Ausgabeeinheit bezeichnet, die mit jedem der beiden Prozessoren 40, 42 in Verbindung steht. Die Ein-/Ausgabeeinheit 46 nimmt Steuerungseingangssignale 48 von den Sensoren 30' auf und leitet diese in einem angepassten Datenformat an jeden der beiden Prozessoren 40, 42 weiter. Ferner erzeugt die Ein-/Ausgabeeinheit 46 in Abhängigkeit von den Prozessoren 40, 42 Steuerungsausgangssignale 50, mit denen die Aktuatoren 32' angesteuert werden.

Mit der Bezugsziffer 52 ist ein Projektdatenspeicher bezeichnet, in dem Projektdaten 54 in Form von Datenpaketen gespeichert sind. Hierbei handelt es sich um ein erstes Datenpaket 56, welches erste Konfigurationsdaten 58 für einen Databroker 60 enthält. Der Projektdatenspeicher 52 enthält ein zweites Datenpaket 62, mit zweiten Konfigurationsdaten 64 für einen Eventbroker 66. Der Projektdatenspeicher 52 enthält ein drittes Datenpaket 68 mit dritten Konfigurationsdaten 70 für eine Datenbusschnittstelle 72. Ferner enthält der Projektdatenspeicher 52 ein viertes Datenpaket, welches Konfigurationsdaten für den Projektdatenspeicher 52 selbst enthält. Darüber hinaus enthält der Projektdatenspeicher 52 ein fünftes Datenpaket 76 und ein sechstes Datenpaket 78. Diese beiden Datenpakete enthalten Programmdaten, die denjenigen Umfang eines Anwenderprogramms repräsentieren, der in der Steuereinheit 28' abgearbeitet wird. Ferner enthält der Projektdatenspeicher 52 ein siebtes Datenpaket 80, welches Parametrisierungsdaten enthält. Diese Parametrisierungsdaten werden beispielsweise bei der Abarbeitung der Projektdaten benötigt und definieren beispielsweise Wertebereiche für Variablen oder Funktionalitäten.

Die Aktuatoren 32' und die Sensoren 30' sind ebenfalls mit Projektdatenspeichern 52', 52", 52'", 52"" ausgestattet. Dies soll keine einschränkende Wirkung haben. Es müssen nicht alle Steuerungshardwarekomponenten Projektdatenspeicher aufweisen. Ebenso wenig ist es zwingend, dass in dem Projektdatenspeicher 52 ausschließlich Projektdaten 54 gespeichert sind, die in Einheiten verarbeitet werden, die in der Steuereinheit 28' enthalten sind. In dem Projektdatenspeicher 52 können auch Projektdaten 54 gespeichert sein, die in einer anderen Steuerungshardwarekomponente benötigt bzw. verarbeitet werden. Ebenso können Datenpakete von Einheiten, die in der Steuereinheit 28' enthalten sind, auch in einem Projektdatenspeicher einer anderen Steuerungshardwarekomponente gespeichert sein. Auch soll die in Fig. 2 gewählte Aufteilung in die einzelnen Datenpakete keinen einschränkende Wirkung haben. Es ist auch denkbar, unterschiedliche Projektdaten, die allesamt für eine Datenverarbeitungseinheit bestimmt sind, beispielsweise Programmdaten und Konfigurationsdaten, zu einem Datenpaket zusammenzufassen.

Der Projektdatenspeicher 52 ist so ausgebildet, dass die in ihm gespeicherten Projektdaten 54 nullspannungssicher gespeichert sind. Hierzu ist der Projektdatenspeicher 52 beispielsweise als Flashspeicher oder als SD-Card oder als CF-Card ausgeführt.

Bei dem Projektdatenspeicher 52, dem Databroker 60, dem Eventbroker 66 und der Datenbusschnittstelle 72 handelt es sich um Datenverarbeitungseinheiten. Die Datenbusschnittstelle 72 stellt sicher, dass ein Datenaustausch zwischen der Steuereinheit 28' und der Verbindungseinheit 34 synchronisiert ist, d.h. gemäß dem Protokoll des verwendeten Datenbussystems erfolgt. Dabei steuert die Datenbusschnittstelle 72 sowohl den Databroker 60 als auch den Eventbroker 66. Über den Eventbroker 66 werden ereignisbasiert Daten zwischen der Steuereinheit 28' und der Verbindungseinheit 34 und somit einer anderen Steuerungshardwarekomponente, ausgetauscht. Beispielsweise werden beim Verteilvorgang die in dem Projektdatenspeicher 52 zu speichernden Projektdaten über den Eventbroker 66 zugeführt. Ferner können einer anderen Steuerungshardwarekomponente Projektdaten, die diese angefordert hat und die in dem Projektdatenspeicher 52 abgespeichert sind, über den Eventbroker 66 zugeführt werden.

Über den Databroker 60 erfolgt ein datenbasierter Datenaustausch zwischen der Steuereinheit 28' und der Verbindungseinheit 34 und somit einer der anderen Steuerungshardwarekomponenten. Beispielsweise werden über den Databroker 60 in der Steuereinheit 28' benötigte Steuerungseingangssignale zugeführt oder in der Steuereinheit 28' erzeugte Steuerungsausgangssignale ausgegeben.

Die Projektdaten 54 liegen in Form von Maschinencode vor. Für ein fehlersicheres Arbeiten der Steuereinheit 28' sind im Projektdatenspeicher 52 zwei Datenpakete 76, 78 mit Programmdaten abgespeichert. Das fünfte Datenpaket 76 ist für den ersten Prozessor 40 und das sechste Datenpaket 78 für den zweiten Prozessor 42 bestimmt. Das fünfte Datenpaket 76 umfasst einen ersten Sicherheitscode 82 und einen Standardcode 84. Der erste Sicherheitscode 82 umfasst diejenigen Steueranweisungen, die vom ersten Prozessor 40 im Rahmen der von der Steuereinheit 28' zu erledigenden Sicherheitsaufgaben abzuarbeiten sind. Diese Art von Steueranweisungen werden nachfolgend als Sicherheitssteueranweisungen bezeichnet. Der Standardcode 84 umfasst diejenigen Steueranweisungen, die von dem ersten Prozessor 40 im Rahmen der von der Steuereinheit 28' zu erledigenden Standardaufgaben abzuarbeiten sind. Standardaufgaben sind Aufgaben, die sich aus dem gewünschten "normalen" Betriebsablauf der Anlage ergeben und die keine besondere sicherheitsrelevante Bedeutung haben. Diese Art von Steueranweisungen werden nachfolgend als Standardsteueranweisungen bezeichnet. Das sechste Datenpaket 78 umfasst einen zweiten Sicherheitscode 86, der diejenigen Steueranweisungen umfasst, die vom zweiten Prozessor 42 abzuarbeiten sind. Dies Steueranweisungen werden nachfolgend als Sicherheitsteuerungsanweisungen bezeichnet.

In Abhängigkeit des Bearbeitungsfortganges wird in dem ersten Prozessor 40 zum einen eine erste aktuelle Sicherheitssteueranweisung 88 und zum anderen eine aktuelle Standardsteueranweisung 90 abgearbeitet. Im Wesentlichen zeitgleich wird in dem zweiten Prozessor 42 eine zweite aktuelle Sicherheitssteueranweisung 92 abgearbeitet.

Im Rahmen der Bearbeitung der aktuellen Standardsteueranweisung 90, bei der es sich um eine nicht-sicherheitsrelevante Steueranweisung handelt, werden erste nicht-sicherheitsrelevante Daten 94 zwischen dem ersten Prozessor 40 und der Ein-/Ausgabeeinheit 46 ausgetauscht. Hierbei werden dem ersten Prozessor 40 Momentanwerte von nicht-sicherheitsrelevanten Steuerungseingangssignalen 48 zugeführt, die von nicht-sicherheitsrelevanten Sensoren 95 erzeugt werden. Bei den nicht-sicherheitsrelevanten Sensoren 95 handelt es sich um solche Sensoren, die beispielsweise für eine Antriebsregelung benötigte Eingangsgrößen erfassen. Hierbei kann es sich beispielsweise um Drehzahlen, Winkel oder Geschwindigkeiten handeln. Die nicht-sicherheitsrelevanten Sensoren 95 sind nicht-fehlersicher ausgebildet. Der Ein-/Ausgabeeinheit 46 werden Momentanwerte von nicht-sicherheitsrelevanten Steuerungsausgangssignalen 50 zugeführt, die nicht-sicherheitsrelevanten Aktuatoren 97 zu deren Ansteuerung zugeführt werden. Bei den nicht-sicherheitsrelevanten Aktuatoren 97 kann es sich beispielsweise um Motoren oder Stellzylinder handeln. Die Momentanwerte der nicht-sicherheitsrelevanten Steuerungsausgangssignale 50 werden in Abhängigkeit der nicht-sicherheitsrelevanten Steuerungseingangssignale 48 gemäß den Standardsteueranweisungen ermittelt. Hierbei kann es erforderlich sein, Zwischengrößen zu ermitteln, deren Momentanwerte mittels zweiter nichtsicherheitsrelevanter Daten 96 einem Arbeitsspeicher 98 zugeführt und dort zwischengespeichert werden.

Im Rahmen der Bearbeitung der ersten aktuellen Sicherheitssteueranweisung 88, bei der es sich um eine sicherheitsrelevante Steueranweisung handelt, werden erste sicherheitsrelevante Daten 100 zwischen dem ersten Prozessor 40 und der Ein-/Ausgabeeinheit 46 ausgetauscht. Hierbei werden dem ersten Prozessor 40 Momentanwerte von sicherheitsrelevanten Steuerungseingangssignalen 48' zugeführt, die von sicherheitsrelevanten Sensoren 101 erzeugt werden. Bei den sicherheitsrelevanten Sensoren 101 handelt es sich beispielsweise um Not-Aus-Taster, Schutztüren, Drehzahlüberwachungsgeräte oder andere Sensoren zur Aufnahme sicherheitsrelevanter Parameter. Der Ein-/Ausgabeeinheit 46 werden Momentanwerte von sicherheitsrelevanten Steuerungsausgangssignalen 50' zugeführt, die sicherheitsrelevanten Aktuatoren 103 zu deren Ansteuerung zugeführt werden. Bei den sicherheitsrelevanten Aktuatoren 103 handelt es sich beispielsweise um redundante Sicherheitsschütze mit Arbeitskontakten, die in der Verbindung zwischen einer Stromversorgung 102 und der Bearbeitungsstation 16 angeordnet sind. Somit kann die Stromversorgung 102 der Bearbeitungsstation 16 zweikanalig abgeschaltet werden, wodurch es möglich ist, bei Auftritt einer entsprechenden Fehlfunktion zumindest die Bearbeitungsstation 16 in einen sicheren Zustand zu überführen. Die Momentanwerte der sicherheitsrelevanten Steuerungsausgangssignale 50' werden in Abhängigkeit der sicherheitsrelevanten Steuerungseingangssignale 48' gemäß den Sicherheitssteueranweisungen ermittelt. Hierbei kann es erforderlich sein, sicherheitsrelevante Zwischengrößen zu ermitteln, deren Momentanwerte mittels zweiter sicherheitsrelevanter Daten 104 dem Arbeitsspeicher 98 zugeführt und dort zwischengespeichert werden.

Im Rahmen der Bearbeitung der zweiten aktuellen Sicherheitssteueranweisung 92, bei der es sich um eine sicherheitsrelevante Steueranweisung handelt, wird entsprechend der ersten aktuellen Sicherheitssteueranweisung 88 verfahren. Bezüglich der zweiten aktuellen Sicherheitssteueranweisung 92 werden dritte sicherheitsrelevante Daten 106, die den ersten sicherheitsrelevanten Daten 100 entsprechen, und vierte sicherheitsrelevante Daten 108, die den zweiten sicherheitsrelevanten Daten 104 entsprechen, in entsprechender Weise verwendet.

Mit der Bezugsziffer 110 sind zwischen einzelnen Steuerungshardwarekomponenten und somit Projektdatenspeichern 52, 52', 52", 52"', 52"" gegebenenfalls auszutauschende Projektdaten gekennzeichnet.

Die in Fig. 2 gewählte Darstellung, gemäß der in der Steuereinheit 28' sowohl nicht-sicherheitsrelevante Steueranweisungen als auch sicherheitsrelevante Steueranweisungen verarbeitet werden, soll keine einschränkende Wirkung haben. Es ist auch denkbar, dass die Steuereinheit 28' für die ausschließliche Verarbeitung von sicherheitsrelevanten Steueranweisungen ausgebildet ist.

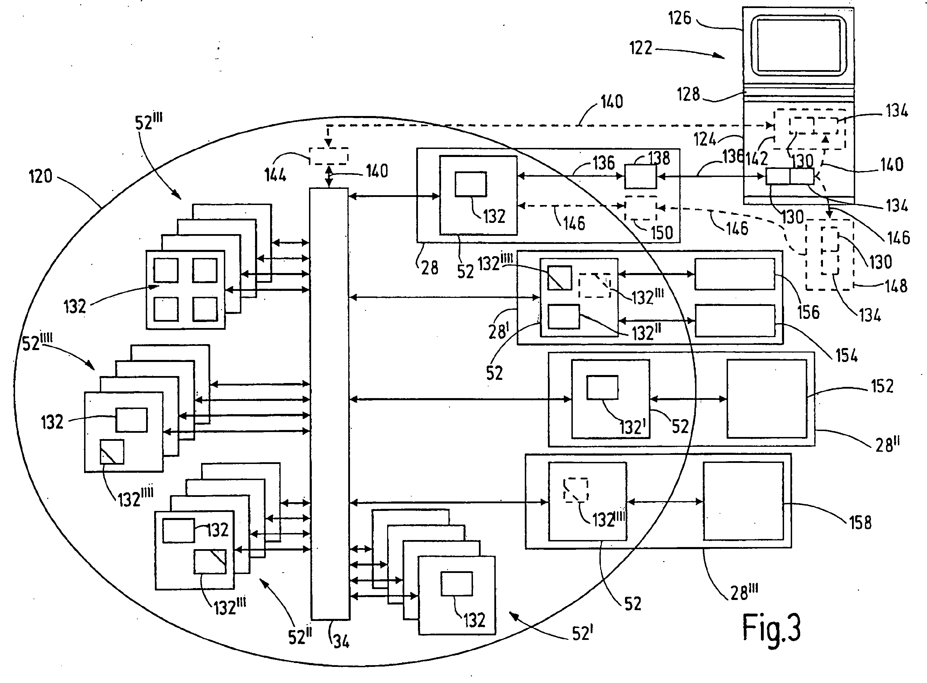

In Fig. 3 sind die in den Steuereinheiten 28 enthaltenen Projektdatenspeicher 52, die in den sicherheitsrelevanten Aktuatoren 103 enthaltenen Projektdatenspeicher 52', die in den nicht-sicherheitsrelevanten Aktuatoren 97 enthaltenen Projektdatenspeicher 52", die in den nicht-sicherheitsrelevanten Sensoren 95 enthaltenen Projektdatenspeicher 52'" und die in den sicherheitsrelevanten Sensoren 101 enthaltenen Projektdatenspeicher 52"" dargestellt. Die einzelnen Projektdatenspeicher sind untereinander über die Verbindungseinheit 34 verbunden. Die Gesamtheit der Projektdatenspeicher bildet zusammen einen virtuellen Projektspeicher 120. Aus Gründen der Übersichtlichkeit wurde auf die Darstellung von Komponenten, die eventuell zwischen einzelnen Projektdatenspeichern und der Verbindungseinheit 34 vorhanden sind, verzichtet.

In Fig. 3 ist eine Programmiereinheit in ihrer Gesamtheit mit der Bezugsziffer 122 bezeichnet. Die Programmiereinheit 122 besteht im Wesentlichen aus einem Computer 124, der mit einer Anzeigeeinheit 126 verbunden ist. Auf dem Computer 124 wird ein Computerprogramm 128 ausgeführt. Das Computerprogramm 128 ermöglicht das Erstellen von Projektdaten 130, die eine auf der zu steuernden Anlage ablaufende Anwendung repräsentieren. Die Projektdaten 130 umfassen dabei Programmdaten, Konfigurationsdaten und Parametrisierungsdaten. Das Computerprogramm 128 wird in der Fachterminologie häufig als Programmiertool bezeichnet. Der Computer 124 kann als PC und die Anzeigeeinheit 126 als Monitor ausgeführt sein.

Gemäß einem Aspekt der Erfindung werden die mit der Programmiereinheit 122 erzeugten und auf dem Computer 124 vorliegenden Projektdaten 130 auf die Projektdatenspeicher 52, 52', 52", 52"', 52"" einer verteilt aufgebauten Sicherheitssteuerung 24 übertragen. Hierzu sind die Projektdaten 130 in eine Vielzahl von Datenpaketen 132 aufgeteilt, wobei die einzelnen Datenpakete 132 jeweils einem der Projektdatenspeicher 52, 52', 52", 52"', 52"" zugeordnet sind. Die Projektdaten, genauer gesagt, die einzelnen Datenpakete 132, werden dabei in Abhängigkeit von Zuordnungsdaten 134 auf die einzelnen Projektdatenspeicher verteilt. Die Zuordnungsdaten 134 werden in der Programmiereinheit 122 erzeugt. Die Zuordnungsdaten 134 können dabei beispielsweise in Abhängigkeit zumindest einer Datenverarbeitungskenngröße oder in Abhängigkeit zumindest einer Funktionszuordnungsgröße ermittelt werden.

Um die Projektdaten 130 auf die einzelnen Projektdatenspeicher 52 verteilen zu können, werden diese einer Verteileinheit zugeführt. Erfindungsgemäß sind hier drei unterschiedliche Vorgehensweisen möglich. Dabei kann eine Sicherheitssteuerung 24 so ausgeführt sein, dass ein Programmierer nach seinem Belieben eine dieser drei Vorgehensweisen wählen kann. Es ist aber auch denkbar, dass eine Sicherheitssteuerung 24 so ausgeführt ist, dass lediglich eine oder aber zwei der Vorgehensweisen für die Übertragung der Projektdaten 130 vorgesehen sind.

Eine erste Vorgehensweise ist durch eine Pfeilfolge 136 angedeutet. Hierbei werden sowohl die Projektdaten 130 als auch die Zuordnungsdaten 134 beispielsweise kabelgebunden von der Programmiereinheit 122 über eine hierfür vorgesehene erste Schnittstelle 138 auf den Projektdatenspeicher 52 übertragen, der sich in der Steuereinheit 28 befindet. In diesem Fall handelt es sich bei der Verteileinheit um einen in der Sicherheitssteuerung angeordneten Projektdatenspeicher. Der in der Steuereinheit 28 angeordnete Projektdatenspeicher 52 verteilt die Datenpakete 132 gemäß den Zuordnungsdaten 134 auf die einzelnen in der Sicherheitssteuerung 24 enthaltenen Projektdatenspeicher 52, 52', 52", 52"', 52"". Hierfür ist besagter Projektdatenspeicher 52 dazu ausgebildet, ihm zugeführte Projektdaten an zumindest einen anderen Projektdatenspeicher weiterleiten zu können.

Eine zweite Vorgehensweise ist durch eine erste Pfeilfolge 140 dargestellt. Hierbei werden die Projektdaten 130 und die Zuordnungsdaten 134 zunächst auf einer in dem Computer 124 enthaltenen externen Verteileinheit 142 bereitgestellt. Die externe Verteileinheit 142 entspricht dabei in ihrer Funktionalität dem in der Steuereinheit 28 enthaltenen Projektdatenspeicher 52. Die Projektdaten 130 werden dann beispielsweise kabelgebunden über eine hierfür vorgesehene zweite Schnittstelle 144 der Verbindungseinheit 34 zugeführt und gemäß den Zuordnungsdaten 134 auf die einzelnen in der Sicherheitssteuerung 24 enthaltenen Projektdatenspeicher 52, 52', 52", 52"', 52"" verteilt. Die externe Verteileinheit 142 muss nicht permanent an die Sicherheitssteuerung 24 angeschlossen sein. Es reicht aus, wenn diese beispielsweise lediglich für den Zeitraum der Datenübertragung angeschlossen ist.

Eine dritte Vorgehensweise ist durch eine zweite Pfeilfolge 146 angedeutet. Hierbei werden sowohl die Projektdaten 130 als auch die Zuordnungsdaten 134 auf ein mobiles Speichermedium 148 übertragen. Bei dem mobilen Speichermedium 148 kann es sich beispielsweise um eine SD-Card, eine CF-Card oder um einen USB-Stick handeln. Das mobile Speichermedium 148 wird dann in eine hierfür vorgesehene Aufnahmeeinheit 150 eingeführt. Die Projektdaten 130 werden dann dem in der Steuereinheit 28 enthaltenen Projektdatenspeicher 52 zugeführt, der dann das Verteilen der Datenpakete 132 gemäß den Zuordnungsdaten 134 auf die in der Sicherheitssteuerung 24 enthaltenen Projektdatenspeicher 52, 52', 52", 52"', 52"" übernimmt.

Was das Verteilen der Projektdaten 130 auf die einzelnen Projektdatenspeicher 52, 52', 52", 52"', 52"" angeht, so sind hierfür unterschiedliche Ansätze denkbar. Gemäß einem ersten Ansatz werden die Projektdaten im Wesentlichen vor Ort, d.h. dort wo sie verarbeitet werden, abgespeichert. Dies ist in Fig. 3 wie folgt dargestellt: Die Steuereinheit 28" enthält eine erste Datenverarbeitungseinheit 152. Die von der ersten Datenverarbeitungseinheit 152 benötigten Projektdaten sind in Form eines Datenpaketes 132' in dem Projektdatenspeicher 52 gespeichert, der in der Steuereinheit 28" enthalten ist. Die erste Datenverarbeitungseinheit 152 kann somit die von ihr benötigten Projektdaten direkt aus diesem Projektdatenspeicher abrufen. Bei diesem Ansatz werden die Zuordnungsdaten 134 in Abhängigkeit zumindest einer Funktionszuordnungsgröße ermittelt. Bei diesem Ansatz werden die Projektdaten 130 in derjenigen Steuerungshardwarekomponente gespeichert, in der sie verarbeitet werden.

Gemäß einem zweiten Ansatz werden die Zuordnungsdaten 134 in Abhängigkeit zumindest einer Datenverarbeitungskenngröße ermittelt. Bei der Datenverarbeitungskenngröße kann es sich beispielsweise um die Taktfrequenz eines der beiden Prozessoren 40, 42 oder um die Datenrate des Databrokers 60 oder des Eventbrokers 66 oder um die Speicherkapazität eines Projektdatenspeichers 52, 52', 52", 52"', 52"" handeln. In einigen Ausführungsbeispielen wird die Kenngröße von der Verteileinheit automatisch ermittelt, indem die Verteileinheit die an die Verbindungseinheit angeschlossenen Projektdatenspeicher abfragt.

Bei dem zweiten Ansatz werden die Projektdaten 130 bevorzugt dahingehend verteilt, dass sie in Steuerungshardwarekomponenten abgespeichert werden, die über eine hohe Datenverarbeitungskapazität verfügen. Bei diesem Ansatz werden die Projektdaten 130 im Wesentlichen beliebig, d.h. ohne Funktionszuordnung auf die in einer Sicherheitssteuerung 24 vorhandenen Projektdatenspeicher 52, 52', 52", 52"', 52"" verteilt. In Fig. 3 ist dies wie folgt dargestellt: Die von einer zweiten Datenverarbeitungseinheit 154 benötigten Projektdaten sind in Form des Datenpakets 132" in dem Projektdatenspeicher 52 abgespeichert, der in der Steuereinheit 28' enthalten ist. In diesem Fall sind die Projektdaten somit in der Steuereinheit abgespeichert, in der sie auch verarbeitet werden. Für eine dritte Datenverarbeitungseinheit 156, die ebenfalls in der Steuereinheit 28' enthalten ist, sind dagegen die von ihr benötigten Projektdaten nicht in demjenigen Projektdatenspeicher 52 abgespeichert, der in der Steuereinheit 28' enthalten ist. Stattdessen sind diese Projektdaten in Form eines Datenpaketes 132'" in einem der Projektdatenspeicher 52" abgespeichert. Die dritte Datenverarbeitungseinheit 156 kann dann über den Projektdatenspeicher 52, der in der Steuereinheit 28' enthalten ist, auf diese Projektdaten zugreifen. Dabei hat es für die dritte Datenverarbeitungseinheit 156 den Anschein, als ob die von ihr benötigten Projektdaten virtuell auf dem Projektdatenspeicher 52 abgespeichert sind, der in der Steuereinheit 28' enthalten ist. Dies ist in Fig. 3 durch das strichliniert dargestellte Datenpaket 132"' angedeutet. Für die dritte Datenverarbeitungseinheit 156 hat der Projektdatenspeicher 52, der in der Steuereinheit 28' enthalten ist, die Funktion eines Proxies. Dieser Projektdatenspeicher ist für die dritte Datenverarbeitungseinheit 156 quasi das Tor zum virtuellen Projektspeicher 120. Um ein beliebiges Verteilen der Projektdaten auf die einzelnen Projektdatenspeicher zu ermöglichen, ist zumindest ein Teil der Projektdatenspeicher dazu ausgebildet, zugeführte Projektdaten an andere Projektdatenspeicher automatisch weiterzuleiten und Projektdaten von anderen Projektdatenspeichern anzufordern. Dabei ist es denkbar, dass einzelne Projektdatenspeicher beide Funktionalitäten gleichzeitig aufweisen. Bei diesem Ansatz ist es auch denkbar, auf den einzelnen Projektdatenspeichern einen Mindestumfang von Projektdaten abzuspeichern. Hierbei handelt es sich beispielsweise um diejenigen Projektdaten, die für das Booten der Sicherheitssteuerung in der jeweiligen Steuerungshardwarekomponente bzw. Datenverarbeitungseinheit hierfür erforderlich sind.

Um die Verfügbarkeit der Sicherheitssteuerung 24 zu erhöhen, wird zumindest ein Teil der Projektdaten 130 redundant in den Projektdatenspeichern 52, 52', 52", 52"', 52"" gespeichert. Dies ist in Fig. 3 wie folgt dargestellt: Die von einer vierten Datenverarbeitungseinheit 158 benötigten Projektdaten sind in Form eines Datenpaketes 132"" sowohl auf dem Projektdatenspeicher 52, der in der Steuereinheit 28' enthalten ist, als auch auf einem der Projektdatenspeicher 52"" gespeichert. Wie im Zusammenhang mit der dritten Datenverarbeitungseinheit 156 beschrieben, sind für die vierte Datenverarbeitungseinheit 158 deren Projektdaten nicht auf dem Projektdatenspeicher 52 gespeichert, der in der Steuereinheit 28'" enthalten ist. Vielmehr kann die vierte Datenverarbeitungseinheit 158 entweder auf das Datenpaket 132"', welches auf dem Projektdatenspeicher 52 gespeichert ist, der in der Steuereinheit 28' enthalten ist, oder auf das Datenpaket 132"", welches in einem der Projektdatenspeicher 52"" gespeichert ist, zugreifen. Fällt beispielsweise der Projektdatenspeicher 52"", auf dem das Datenpaket 132"" abgespeichert ist, oder gar die komplette Steuerungshardwarekomponente, in der dieser Projektdatenspeicher enthalten ist, aus, so stehen die von der vierten Datenverarbeitungseinheit 158 benötigten Projektdaten immer noch zur Verfügung, in diesem Fall auf dem Projektdatenspeicher 52, der in der Steuereinheit 28' enthalten ist. Es können auch solche Projektdaten redundant abgespeichert werden, die primär auf demjenigen Projektdatenspeicher abgespeichert sind, der in derjenigen Steuereinheit enthalten ist, in der die Projektdaten verarbeitet werden. Beispielsweise gilt dies für die Projektdaten des Datenpaketes 132'.

Die in Fig. 3 gewählte Darstellung soll keine einschränkende Wirkung haben. Sicherheitssteuerungen können unterschiedlich ausgebildet sein. So kann eine Sicherheitssteuerung eingesetzt werden, bei der die nicht-sicherheitsrelevanten Sensoren, die sicherheitsrelevanten Sensoren, die nicht-sicherheitsrelevanten Aktuatoren, die sicherheitsrelevanten Aktuatoren und die Steuereinheiten jeweils mit Projektdatenspeichern ausgestattet sind, wie dies in Fig. 3 dargestellt ist. Es können aber auch Sicherheitssteuerungen zum Einsatz kommen, bei denen beispielsweise lediglich die Steuereinheiten mit Projektdatenspeichern ausgestattet sind. Es ist aber auch der Einsatz von Sicherheitssteuerungen denkbar, die einen zwischen diesen beiden Beispielen liegenden Ausstattungsgrad mit Projektdatenspeichern aufweisen. Vorzugsweise sind neben den Steuereinheiten auch die sicherheitsrelevanten Sensoren und die sicherheitsrelevanten Aktuatoren mit Datenspeichern ausgestattet. Ferner ist es nicht zwingend erforderlich, dass sowohl die erste Schnittstelle 138 als auch die Aufnahmeeinheit 150 in einer Steuereinheit angeordnet sind. Beide können einzeln oder zusammen in einer beliebigen Steuerungshardwarekomponente angeordnet sein. Auch ist es denkbar, dass die Schnittstelle 138 und/oder die Aufnahmeeinheit 150 zusammen mit einem der Projektdatenspeicher eine bauliche Einheit bildet. Ferner kann es auch vorgesehen sein, dass mehr als einer der in der Sicherheitssteuerung verbauten Projektdatenspeicher als Verteileinheit einsetzbar ist. Zudem soll die gewählte Darstellung, bei der lediglich jeweils nur einer der Projektdatenspeicher 52', 52", 52"', 52"", und zwar der in der obersten Zeichenebene enthaltene ein Datenpaket enthält, keine einschränkende Wirkung haben. Aus Gründen der Übersichtlichkeit wurde für die in den darunter liegenden Zeichenebenen enthaltenen Projektdatenspeicher auf die Darstellung von Datenpaketen verzichtet.

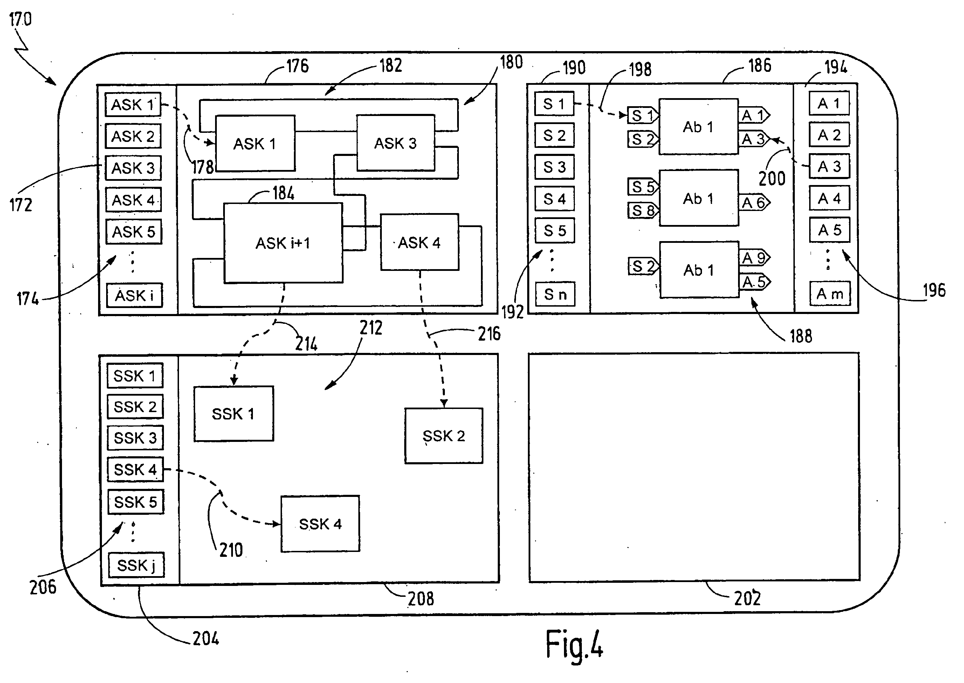

In Fig. 4 ist eine grafische Oberfläche in ihrer Gesamtheit mit der Bezugsziffer 170 bezeichnet. Diese grafische Oberfläche ermöglicht einem Programmierer das Erstellen der Projektdaten 130. Insgesamt werden Programmdaten, Konfigurationsdaten und Parametrisierungsdaten erstellt.

Die grafische Benutzeroberfläche 170 beinhaltet ein Anlagensoftwarekomponenten-Feld 172, welches eine Vielzahl vordefinierter Anlagensoftwarekomponenten 174 in Form von grafischen Symbolen enthält. Das Anwenderprogramm und somit die Programmdaten werden durch Bereitstellen einer Vielzahl von Anlagensoftwarekomponenten erstellt. Zu diesem Zweck beinhaltet die grafische Benutzeroberfläche 170 ein erstes Komponenten-Feld 176. Die bereitzustellenden Anlagensoftwarekomponenten werden ausgewählt und in das erste Komponenten-Feld 176 überführt, wie dies durch einen Pfeil 178 angedeutet ist. Das erste Komponenten-Feld 176 enthält somit eine Vielzahl von bereitgestellten Anlagensoftwarekomponenten 180. Durch logisches Verknüpfen der bereitgestellten Anlagensoftwarekomponenten 180 wird ein Komponententeilprogramm erstellt. Hierzu werden Logikeingänge und Logikausgänge dieser Anlagensoftwarekomponenten untereinander verbunden, was durch eine Vielzahl von Verbindungen 182 dargestellt ist. Zusätzlich zu der Auswahl vordefinierter Anlagensoftwarekomponenten können auch neue Anlagensoftwarekomponenten erstellt werden, wie dies durch die neue Anlagensoftwarekomponente 184 angedeutet ist. Bei den einzelnen Anlagensoftwarekomponenten kann es sich um so genannte Elementarkomponenten handeln, die selbst keine weiteren Softwarekomponenten enthalten. Es kann sich aber auch um so genannte Gruppenkomponenten handeln, die selbst weitere Softwarekomponenten enthalten. Eine Elementarkomponente enthält mehrere Aspektblöcke. Jeder dieser Aspektblöcke ist einem von mehreren untereinander unterschiedlichen Steuerungsaspekten zugeordnet, wobei jeder dieser Steuerungsaspekte einen eigenständigen Teilaspekt der Sicherheitssteuerung repräsentiert. Die Anlagensoftwarekomponente enthält dabei all diejenigen Aspektblöcke, die für diejenige Anlagenhardwarekomponente von Bedeutung sind, die die Anlagensoftwarekomponente repräsentiert. Im Vergleich zu einer Elementarkomponente enthält eine Gruppenkomponente neben den Aspektblöcken zusätzlich Softwarekomponenten, die als Elementar- oder als Gruppenkomponente ausgeführt sein können. Durch die Verwendung von Gruppenkomponenten kann ein Anwenderprogramm mit mehreren Hierarchieebenen erstellt werden.

Vorteilhafterweise kann es sich bei den untereinander unterschiedlichen Steuerungsaspekten um folgende Steuerungsaspekte handeln: Standardsteuerungsaspekt, Sicherheitssteuerungsaspekt, Diagnoseäspekt, Visualisierungsaspekt, Eintrittsregelungsaspekt, Kühlungsaspekt, Zugriffsberechtigungsaspekt, Wartungsaspekt, Verriegelungsaspekt, Handbetriebsaspekt oder Datenverwaltungsaspekt.

Für jeden in einer Anlagensoftwarekomponente enthaltenen Aspektblock sind zumindest diejenigen Logikgrößen und/oder diejenigen Parameter und/oder diejenigen Sensorsignale, die zur Verarbeitung benötigt werden und über zugehörige Eingänge dem Aspektblock zuzuführen sind, und diejenigen Logikgrößen und/oder diejenigen Parameter und/oder diejenigen Ausgangssignale, die in der Anzahl von Aspektblöcken jeweils ermittelt und über zugehörige Ausgänge von dem Aspektblock ausgegeben werden, zunächst dem Grunde nach festgelegt. Das Festlegen der konkreten Sensoren und/oder Aktuatoren, die mit dem jeweiligen Aspektblock zu verbinden sind, erfolgt letztlich erst beim Erstellen des Anwenderprogramms. Ferner ist zumindest in einem Teil der in einer Anlagensoftwarekomponente enthaltenen Aspektblöcke jeweils ein Funktionsprogramm hinterlegt, welches Aspekteigenschaften der Anlagenhardwarekomponente für denjenigen Steuerungsaspekt festlegt, dem der jeweilige Aspektblock zugeordnet ist.

Die grafische Oberfläche 170 beinhaltet ferner ein Aspektfeld 186. In diesem Aspektfeld 186 ist eine Vielzahl von Aspektblöcken 188 angeordnet. Jeder dieser Aspektblöcke ist demselben Steuerungsaspekt zugeordnet. Dabei umfasst die Vielzahl von Aspektblöcken 188 die in sämtlichen Hierarchieebenen des Anwenderprogramms enthaltenen Aspektblöcke.

Die grafische Oberfläche 170 beinhaltet weiter ein Sensorenfeld 190. In diesem Sensorenfeld 190 ist eine Vielzahl von grafischen Sensorsymbolen 192 angeordnet. Für jeden in der zu steuernden Anlage enthaltenen Sensor ist dabei ein grafisches Sensorsymbol vorgesehen. Als weiteres Feld enthält die grafische Oberfläche 170 ein Aktuatorenfeld 194. In diesem Aktuatorenfeld 194 ist eine Vielzahl von grafischen Aktuatorensymbolen 196 angeordnet. Für jeden in der zu steuernden Anlage enthaltenen Aktuator ist dabei ein grafisches Aktuatorensymbol vorgesehen. Für die in dem Aspektfeld 186 enthaltene Vielzahl von Aspektblöcken 188 wird ein Aspektteilprogramm erstellt. Hierzu wird zumindest für einen Teil der Aspektblöcke sowohl für deren Eingänge als auch für deren Ausgänge ein so genanntes I/O-Mapping durchgeführt. Das heißt, zumindest einem Teil der Signaleingänge werden diejenigen Sensoren zugeordnet, deren Sensorsignale in dem jeweiligen Aspektblock verarbeitet werden. Dies ist beispielhaft durch einen Pfeil 198 dargestellt. Außerdem werden zumindest einem Teil der Steuerungsausgänge Aktuatoren zugeordnet, die mit den in dem jeweiligen Aspektblock ermittelten Ausgangssignalen angesteuert werden. Dies ist beispielhaft durch einen Pfeil 200 angedeutet. Alternativ kann das I/O-Mapping auch durch textuelle Eingaben in einem Eingabefeld 202 vorgenommen werden.

Die grafische Oberfläche 170 beinhaltet ein Steuerungssoftwarekomponenten-Feld 204, welches eine Vielzahl vordefinierter Steuerungssoftwarekomponenten 206 enthält. Jede dieser Steuerungssoftwarekomponenten 206 repräsentiert eine Steuerungshardwarekomponente, die in einer verteilt aufgebauten Sicherheitssteuerung 24 eingesetzt werden kann. Bei den Steuerungshardwarekomponenten handelt es sich beispielsweise um Steuereinheiten, Sensoren oder Aktuatoren.

Die grafische Oberfläche 170 beinhaltet ferner ein zweites Komponenten-Feld 208. In diesem zweiten Komponenten-Feld 208 kann der Programmierer des Anwenderprogramms diejenigen Steuerungssoftwarekomponenten einfügen, die diejenigen Steuerungshardwarekomponenten repräsentieren, aus denen die verteilte Sicherheitssteuerung 24 aufgebaut ist. Dies erfolgt durch Auswahl einzelner Steuerungssoftwarekomponenten 206 und Überführen in das zweite Komponenten-Feld 208, wie dies beispielhaft durch einen Pfeil 210 angedeutet ist. Das zweite Komponenten-Feld 208 enthält somit eine Vielzahl von bereitgestellten Steuerungssoftwarekomponenten 212. Möchte der Programmierer zumindest für einen Teilumfang des Anwenderprogramms festlegen, welche Projektdaten in welcher Steuerungshardwarekomponente, genauer gesagt, in welchem Projektdatenspeicher gespeichert werden sollen, so kann er zumindest einen Teil der bereitgestellten Anlagensoftwarekomponenten 180 den bereitgestellten Steuerungssoftwarekomponenten 212 zuordnen. Dies ist durch Pfeile 214, 216 angedeutet. Aus diesen Zuordnungen werden Funktionszuordnungsgrößen erzeugt, in deren Abhängigkeit dann die Zuordnungsdaten 134 ermittelt werden. Bei der Ermittlung der Funktionszuordnungsgrößen können auch die Verbindungen 182 zwischen den einzelnen Anlagensoftwarekomponenten 180 berücksichtigt werden. Ferner kann auch das für die Aspektblöcke vorgenommene I/O-Mapping berücksichtigt werden.

Die Zuordnungsdaten 134 können aber auch automatisch, d.h. ohne dass der Programmierer eine Zuordnung vornimmt, ermittelt werden. Für jede durch eine Steuerungssoftwarekomponente 212 repräsentierte Steuerungshardwarekomponente 26 ist zumindest eine Datenverarbeitungskenngröße in einer Datenbank hinterlegt, so dass die Zuordnungsdaten 134 beispielsweise in Abhängigkeit dieser Datenverarbeitungskenngrößen ermittelt werden können. In diesem Fall erfolgt das Verteilen der Projektdaten 130 auf die einzelnen Projektdatenspeicher unter dem Gesichtspunkt der Datenverarbeitungskapazität der einzelnen Steuerungshardwarekomponenten. Es ist auch folgende Vorgehensweise denkbar: das Programmiertool ist so ausgebildet, dass die Programmiereinheit vor Beginn des Verteilvorgangs zunächst Anfragen an die einzelnen Steuerungshardwarekomponenten sendet, um die jeweils aktuellen Datenverarbeitungskenngrößen zu ermitteln.

Was das Ermitteln der Zuordnungsdaten 134 angeht, so sind verschiedene Ausgestaltungen denkbar: In einer ersten Ausgestaltung werden die Zuordnungsdaten 134 ausschließlich in Abhängigkeit von Datenverarbeitungskenngrößen ermittelt. In diesem Fall werden die Projektdaten gemäß der Datenverarbeitungskapazität der einzelnen Steuerungshardwarekomponenten verteilt. In einer zweiten Ausgestaltung werden die Zuordnungsdaten 134 ausschließlich in Abhängigkeit von Funktionszuordnungsgrößen ermittelt. Wobei die Funktionszuordnungsgrößen diejenigen Zuordnungen repräsentieren, die der Programmierer durch zuordnen einzelner Anlagensoftwarekomponenten zu einzelnen Steuerungssoftwarekomponenten vorgibt. In diesem Fall legt der Programmierer das Verteilen der Projektdaten auf die einzelnen Projektdatenspeicher fest. Die Funktionszuordnungsgrößen repräsentieren einen Speicherort, insbesondere einen Projektdatenspeicher, der durch die Nähe von zu verarbeitenden Projektdaten und hierfür benötigter Daten, die beispielsweise von einem Sensor oder einer weiteren Steuereinheit stammen, definiert ist. In einer dritten Ausgestaltung können die Zuordnungsdaten 134 sowohl in Abhängigkeit von Datenverarbeitungskenngrößen als auch in Abhängigkeit von Funktionszuordnungsgrößen ermittelt werden. In diesem Fall ist es denkbar, dass unter Verwendung der Datenverarbeitungskenngrößen zunächst ein Vorschlag für die Zuordnung der Projektdaten 130 zu den einzelnen Projektdatenspeichern erstellt wird, die der Programmierer dann immer noch nach seinen Vorstellungen abändern kann. Hierbei handelt es sich um eine zweistufige Vorgehensweise. Zunächst wird eine Verteilung der Projektdaten nach dem Gesichtspunkt der Datenverarbeitungskapazität vorgeschlagen, die dann anhand des Gesichtspunktes der Funktionszuordnung abgeändert werden kann.

Für die vordefinierten Steuerungssoftwarekomponenten 206 können auch vordefinierte Konfigurationsdaten in einer Datenbank hinterlegt sein. Somit enthalten die Projektdaten 130 automatisch durch Bereitstellen von Steuerungssoftwarekomponenten auch die zugehörigen Konfigurationsdaten. Es besteht aber auch die Möglichkeit, Konfigurationsdaten beim Erstellen des Anwenderprogramms abzuändern oder überhaupt vorzugeben, beispielsweise durch entsprechende Eingaben in das Eingabefeld 202. Dies kann beispielsweise auch erfolgen, nachdem das Anwenderprogramm erstellt ist. Für die Aspektblöcke 188 können in entsprechender Weise Parametrisierungsdaten in einer Datenbank hinterlegt sein. Darüber hinaus besteht, wie im Fall der Konfigurationsdaten, auch die Möglichkeit, diese abzuändern bzw. überhaupt vorzugeben.

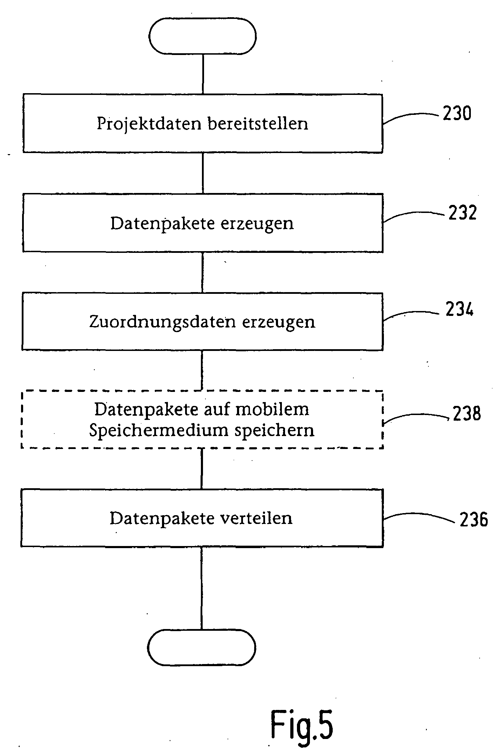

Das in Fig. 5 dargestellte Flussdiagramm zeigt den Ablauf des neuen Verfahrens.

Gemäß einem Schritt 230 werden die Projektdaten 130 bereitgestellt. In einem nachfolgenden Schritt 232 werden die Datenpakete 132 erzeugt. Daran schließt sich ein Schritt 234 an, in dem die Zuordnungsdaten 134 erzeugt werden. In einem Schritt 236 werden dann die einzelnen Datenpakete 132 auf die einzelnen Projektdatenspeicher 52, 52', 52", 52"', 52"" gemäß den Zuordnungsdaten 134 verteilt. Je nachdem, nach welcher Vorgehensweise das Verteilen der Datenpakete erfolgt, schließt sich der Schritt 236 nicht unmittelbar an den Schritt 234 an. Werden die Datenpakete unter Einsatz eines mobilen Speichermediums 148 verteilt, so wird zwischen dem Schritt 234 und dem Schritt 236 ein Schritt 238 ausgeführt, in welchem die Datenpakete 132 und die Zuordnungsdaten 134 auf dem mobilen Speichermedium 148 gespeichert werden.

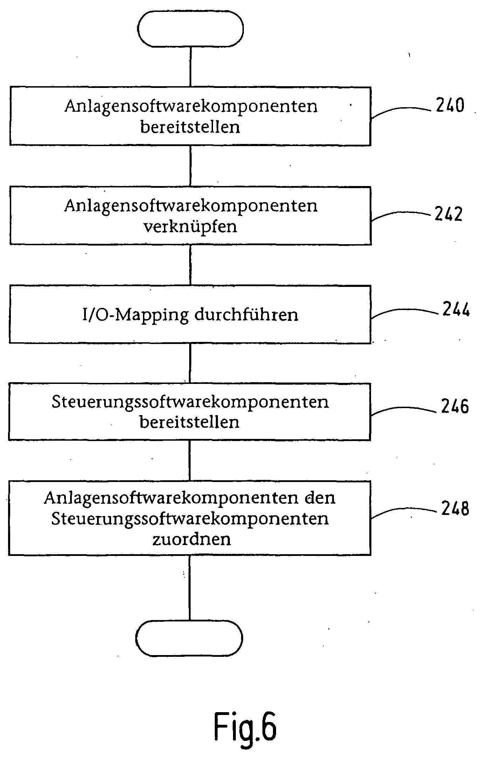

Das in Fig. 6 dargestellte Flussdiagramm zeigt die prinzipielle Vorgehensweise beim Bereitstellen der Projektdaten 130.

In einem Schritt 240 werden Anlagensoftwarekomponenten 180 bereitgestellt. In einem sich anschließenden Schritt 242 werden die bereitgestellten Anlagensoftwarekomponenten 180 verknüpft. Daran schließt sich ein Schritt 244 an, in welchem für die einzelnen Aspektblöcke 188 die Sensoren und Aktuatoren festgelegt werden, d.h. das so genannte I/O-Mapping durchgeführt wird. In einem darauffolgenden Schritt 246 werden Steuerungssoftwarekomponenten 212 bereitgestellt. In einem sich anschließenden Schritt 248 werden die bereitgestellten Anlagensoftwarekomponenten 180 den bereitgestellten Steuerungssoftwarekomponenten 212 zugeordnet.

## Patentansprüche

1. Sicherheitssteuerung zum Steuern einer automatisierten Anlage (10) in Abhängigkeit von Projektdaten (130, 132), die eine auf der Anlage (10) ablaufende Anwendung repräsentieren,
mit einer Vielzahl von Steuerungshardwarekomponenten (28, 28', 28", 28'"), die jeweils einen Projektdatenspeicher (52) und zumindest eine Datenverarbeitungseinheit (152, 154, 156, 158) aufweisen, wobei die Projektdatenspeicher (52) jeweils dazu ausgebildet sind, ihnen jeweils zugeführte Projektdaten (130, 132) zu speichern,
mit einer Verbindungseinheit (34), über die die Steuerungshardwarekomponenten (28, 28', 28", 28"') untereinander verbunden sind, und
mit einer Verteileinheit (142), die dazu ausgebildet ist, zumindest einen Teil der Projektdaten (130, 132) über die Verbindungseinheit (34) auf zumindest einen Teil der Projektdatenspeicher (52) zu verteilen,
wobei mindestens eine aus der Vielzahl von Steuerungshardwarekomponenten eine Steuereinheit (28') ist, die zweikanalig-redundant aufgebaut ist und eine erste und eine zweite Datenverarbeitungseinheit (154, 156) besitzt,
wobei für die erste Datenverarbeitungseinheit (154) bestimmte Projektdaten (132") in einem ersten Projektdatenspeicher gespeichert sind, der in der Steuereinheit (28') enthalten ist, in der die erste Datenverarbeitungseinheit (154) enthalten ist, und
wobei die für die zweite Datenverarbeitungseinheit (156) benötigte Projektdaten (132"') in einem zweiten Projektdatenspeicher abgespeichert sind,
**dadurch gekennzeichnet, dass** der zweite Projektdatenspeicher nicht in der Steuereinheit (28'), sondern in einer anderen Steuerungshardwarekomponente enthalten ist, und dass in dem ersten Projektdatenspeicher auch Projektdaten gespeichert sind, die in der anderen Steuerungshardwarekomponente benötigt werden, wobei die Projektdaten Programmdaten (76, 78) und/oder Konfigurationsdaten (58, 64, 70) und/oder Parametrisierungsdaten (80) umfassen.

2. Sicherheitssteuerung nach Anspruch 1, **dadurch gekennzeichnet, dass** es sich bei der Verteileinheit (142) um einen der Projektdatenspeicher (52) handelt.

3. Sicherheitssteuerung nach einem der vorstehenden Ansprüche, **dadurch gekennzeichnet, dass** es sich bei der Verteileinheit (142) um eine externe Verteileinheit handelt, die zumindest zeitweise an eine in der Sicherheitssteuerung (24) hierfür vorgesehene Schnittstelle (144) angeschlossen ist.

4. Sicherheitssteuerung nach einem der vorstehenden Ansprüche, **dadurch gekennzeichnet, dass** zumindest einer der Projektdatenspeicher (52) ferner dazu ausgebildet ist, ihm zugeführte Projektdaten (130, 132) an zumindest einen anderen Projektdatenspeicher weiterzuleiten oder in einem anderen Projektdatenspeicher (52', 52", 52"', 52"") gespeicherte Projektdaten (130, 132) anzufordern.

5. Sicherheitssteuerung nach einem der vorstehenden Ansprüche, **dadurch gekennzeichnet, dass** es sich bei der Vielzahl von Steuerungshardwarekomponenten um Steuereinheiten (28) und/oder Sensoren (30) und/oder Aktuatoren (32) handelt.

6. Sicherheitssteuerung nach einem der vorstehenden Ansprüche, **dadurch gekennzeichnet, dass** die Projektdaten (130) in eine Vielzahl von Datenpaketen (132) aufgeteilt sind, wobei die einzelnen Datenpakete (132) jeweils zumindest einem der Projektdatenspeicher (52) zugeordnet sind.

7. Sicherheitssteuerung nach einem der vorstehenden Ansprüche, **dadurch gekennzeichnet, dass** für das Erstellen der Projektdaten (130, 132) eine Programmiereinheit (122) vorgesehen ist, wobei die Programmiereinheit (122) dazu ausgebildet ist, Zuordnungsdaten (134) zu erzeugen, wobei die Verteileinheit (142) ferner dazu ausgebildet ist, die Projektdaten (130) in Abhängigkeit der Zuordnungsdaten (134) auf die Projektdatenspeicher (52) zu verteilen.

8. Sicherheitssteuerung nach Anspruch 7, **dadurch gekennzeichnet, dass** die Programmiereinheit (122) dazu ausgebildet ist, die Zuordnungsdaten (134) in Abhängigkeit zumindest einer Datenverarbeitungskenngröße zu ermitteln.

9. Sicherheitssteuerung nach Anspruch 7 oder 8, **dadurch gekennzeichnet, dass** die Programmiereinheit (122) dazu ausgebildet ist, die Zuordnungsdaten (134) in Abhängigkeit zumindest einer Funktionszuordnungsgröße zu ermitteln.

10. Sicherheitssteuerung nach einem der vorstehenden Ansprüche, **dadurch gekennzeichnet, dass** zumindest ein Teil der Projektdaten (130, 132) redundant in den Projektdatenspeichern (52) gespeichert ist.

11. Sicherheitssteuerung nach einem der vorstehenden Ansprüche, **dadurch gekennzeichnet, dass** zumindest ein Teil der Projektdatenspeicher (52) dazu ausgebildet ist, die jeweils zugeführten Projektdaten (130) nullspannungssicher zu speichern.

12. Verfahren zum Steuern einer automatisierten Anlage (10) mittels einer Sicherheitssteuerung (24) in Abhängigkeit von Projektdaten (130, 132), die eine auf der Anlage (10) ablaufende Anwendung repräsentieren, wobei die Sicherheitssteuerung (24) aus einer Vielzahl von Steuerungshardwarekomponenten (28, 28', 28", 28"') aufgebaut ist, die untereinander über eine Verbindungseinheit (34) verbunden sind, wobei zumindest ein Teil der Steuerungshardwarekomponenten (28, 28', 28", 28"') jeweils einen Projektdatenspeicher (52) und zumindest eine Datenverarbeitungseinheit (152, 154, 156, 158) aufweisen, und wobei die Projektdatenspeicher (52) jeweils dazu ausgebildet sind, ihnen jeweils zugeführte Projektdaten (130, 132) zu speichern, wobei mindestens eine aus der Vielzahl von Steuerungshardwarekomponenten eine Steuereinheit (28') ist, die zweikanalig-redundant aufgebaut ist und eine erste und eine zweite Datenverarbeitungseinheit (154, 156) besitzt, mit den Schritten:
- Bereitstellen von Projektdaten (130, 132), und
- Verteilen zumindest eines Teils der Projektdaten (130, 132) auf zumindest einen Teil der Projektdatenspeicher (52),
wobei für die erste Datenverarbeitungseinheit (154) bestimmte Projektdaten (132") in einem ersten Projektdatenspeicher (52) gespeichert werden, der in der Steuereinheit (28') enthalten ist, in der die erste Datenverarbeitungseinheit (154) enthalten ist, und wobei für die zweite Datenverarbeitungseinheit (156) benötigte Projektdaten (132"') in einem zweiten Projektdatenspeicher (52") abgespeichert sind,
**dadurch gekennzeichnet, dass** der zweite Projektdatenspeicher (52") nicht in der Steuereinheit (28'), sondern in einer anderen Steuerungshardwarekomponente enthalten ist, und dass in dem ersten Projektdatenspeicher (52) auch Projektdaten gespeichert sind, die in der anderen Steuerungshardwarekomponente benötigt werden, wobei die Projektdaten Programmdaten (76, 78) und/oder Konfigurationsdaten (58, 64, 70) und/oder Parametrisierungsdaten (80) umfassen.

13. Computerprogrammprodukt mit einem Datenträger mit Programmcode, der dazu ausgebildet ist, ein Verfahren nach Anspruch 12 durchzuführen, wenn der Programmcode auf einer Sicherheitssteuerung (24) nach einem der Ansprüche 1 bis 11 abläuft.

## Claims

1. A safety controller for controlling an automated installation (10) on the basis of project data (130) which represent an application running on the installation (10), comprising
a plurality of controller hardware components (28, 28', 28", 28"') each comprising a respective project data memory (52) and at least one data processing unit (152, 154, 156, 158), with the project data memories (52) each being designed for storing project data (130, 132) supplied to them,
a connecting unit (34) via which the controller hardware components (28, 28', 28", 28"') are connected to one another, and
a distribution unit (142) designed for distributing at least some of the project data (130, 132) via the connecting unit (34) to at least some of the project data memories (52),
wherein at least one from the plurality of controller hardware components (28, 28', 28", 28"') is a control unit (28') implemented in a two-channel redundant fashion and comprising a first and a second data processing unit (152, 154),
wherein project data (132") intended for the first data processing unit (154) are stored in a first project data memory arranged in the control unit (28') where the first data processing unit (154) is arranged, and
wherein project data (132"') required for the second data processing unit (156) are stored in a second project data memory,
**characterized in that** the second project data memory is arranged not in the control unit (28') but in another controller hardware component, and **in that** projet data, which are required in said another controller hardware component, are stored in the first project data memory, said project data comprising program data (76, 78) and/or configuration data (58, 64, 70) and/or parameterization data (80).

2. The safety controller of claim 1, **characterized in that** the distribution unit (142) is one of the project data memories (52).

3. The safety controller of one of the preceding claims, **characterized in that** the distribution unit (142) is an external distribution unit which is connected at least temporarily to an interface (144) provided for this purpose in the safety controller (24).

4. The safety controller of one of the preceding claims, **characterized in that** at least one of the project data memories (52) is also designed for forwarding project data (130, 132) supplied to it to at least one other project data memory (52', 52", 52"', 52""), or for requesting project data (130, 132) stored in another project data memory (52', 52", 52"', 52"").

5. The safety controller of one of the preceding claims, **characterized in that** the controller hardware components (26) are control units (28) and/or sensors (30) and/or actuators (32).

6. The safety controller of one of the preceding claims, **characterized in that** the project data (130) are divided into a plurality of data packets (132), wherein the individual data packets (132) each are allocated to at least one of the project data memories (52).

7. The safety controller of one of the preceding claims, **characterized in that** a programming unit (122) is provided for generating the project data (130, 132), wherein the programming unit (122) is designed for generating allocation data (134), wherein the distribution unit (142) is designed for distributing the project data (130) on the basis of the allocation data (134) to the project data memories (52).

8. The safety controller of claim 7, **characterized in that** the programming unit (122) is designed for determining the allocation data (134) on the basis of at least one data processing characteristic figure.

9. The safety controller of claim 7 or 8, **characterized in that** the programming unit (122) is designed for determining the allocation data (134) on the basis of at least one function allocation quantity.

10. The safety controller of one of the preceding claims, **characterized in that** at least part of the project data (130, 132) is stored redundantly in the project data memories (52).

11. The safety controller of one of the preceding claims, **characterized in that** at least some of the project data memories (52) are designed for storing the respectively supplied project data (130) in a zero-voltage-proof manner.

12. A method for controlling an automated installation (10) by means of a safety controller (24) on the basis of project data (130, 132) which represent an application running on the installation (10), wherein the safety controller (24) comprises a plurality of controller hardware components (28, 28', 28", 28"') which are connected to one another via a connecting unit (34), wherein at least some of the controller hardware components (28, 28', 28", 28"') comprise a respective project data memory (52) and at least one data processing unit (152, 154, 156, 158), and wherein the project data memories (52) each are designed for storing project data (130) supplied to them, wherein at least one from the plurality of controller hardware components (28, 28', 28", 28"') is a control unit (28') implemented in a two-channel redundant fashion and comprising a first and a second data processing unit (152, 154), the method comprising the steps of
- providing project data (130, 132), and
- distributing at least some of the project data (130, 132) to at least some of the project data memories (52),
wherein project data (132") intended for the first data processing unit (154) are stored in a first project data memory arranged in the control unit (28') where the first data processing unit (154) is arranged, and wherein project data (132"') required for the second data processing unit (156) are stored in a second project data memory,
**characterized in that** the second project data memory (52") is arranged not in the control unit (28') but in another controller hardware component, and **in that** projet data, which are required in said another controller hardware component, are stored in the first project data memory, said project data comprising program data (76, 78) and/or configuration data (58, 64, 70) and/or parameterization data (80).

13. A computer program product comprising a data carrier with program code, which is designed for performing a method of claim 12 when the program code is running on a safety controller (24) of one of claims 1 to 11.

## Revendications

1. Commande sécurisée destinée à commander une installation automatique (10) en fonction de données de projet (130, 132) qui représentent une application qui se déroule sur l'installation (10),
la commande présentant plusieurs composants électroniques de commande (28, 28', 28", 28"') qui présentent tous une mémoire (52) de données de projet et au moins une unité (152, 154, 156, 158) de traitement de données, les mémoires (52) de données de projet étant toutes configurées pour conserver des données de projet (130, 132) qui leur sont amenées,
une unité de liaison (34) par laquelle les composants électroniques de commande (28, 28', 28", 28"') sont reliés les uns aux autres et
une unité de répartition (142) configurée pour répartir au moins une partie des données de projet (130, 132) entre au moins une partie des mémoires (52) de données de projet par l'intermédiaire de l'unité de liaison (34),
au moins un des différents composants électroniques de commande étant une unité de commande (28') configurée à redondance en double canal et possédant une première et une deuxième unité (154, 156) de traitement de données,
des données de projet (132") définies pour la première unité (154) de traitement de données étant conservées dans une première mémoire de données de projet qui est reprise dans l'unité de commande (28') qui contient la première unité (154) de traitement de données,
les données de projet (132"') nécessaires pour la deuxième unité (156) de traitement de données étant conservées en mémoire dans une deuxième mémoire de données de projet,
**caractérisée en ce que**
la deuxième mémoire de données de projet n'est pas reprise dans l'unité de commande (28') mais dans un autre composant électronique de commande et
**en ce que** la première mémoire de données de projet conserve également des données de projet qui sont nécessaires dans l'autre composant électronique de commande, les données de projet comprenant des données de programme (76, 78), des données de configuration (58, 64, 70) et/ou des données de paramétrage (80).

2. Commande sécurisée selon la revendication 1, **caractérisée en ce que** l'unité de répartition (142) est l'une des mémoires (52) de données de projet.

3. Commande sécurisée selon l'une des revendications précédentes, **caractérisée en ce que** l'unité de répartition (142) est une unité externe de répartition qui est raccordée au moins une partie du temps à une interface (144) prévue dans ce but dans la commande sécurisée (24).

4. Commande sécurisée selon l'une des revendications précédentes, **caractérisée en ce qu'**au moins l'une des mémoires (52) de données de projet est en outre configurée pour transmettre à au moins une autre mémoire de données de projet les données de projet (130, 132) qui lui sont amenées ou pour demander des données de projet (130, 132) conservées dans une autre mémoire (52', 52", 52"', 52"") de données de projet.

5. Commande sécurisée selon l'une des revendications précédentes, **caractérisée en ce que** les différents composants électroniques de commande sont des unités de commande (28), des capteurs (30) et/ou des actionneurs (32).

6. Commande sécurisée selon l'une des revendications précédentes, **caractérisée en ce que** les données de projet (130) sont divisées en plusieurs paquets (132) de données, les différents paquets (132) de données étant tous associés à au moins l'une des mémoires (52) de données de projet.

7. Commande sécurisée selon l'une des revendications précédentes, **caractérisée en ce qu'**une unité de programmation (122) est prévue pour l'établissement des données de projet (130, 132), l'unité de programmation (122) étant configurée pour former des données d'association (134), l'unité de répartition (142) étant en outre configurée pour répartir les données de projet (130) entre les mémoires (52) de données de projet en fonction des données d'attribution (134).

8. Commande sécurisée selon la revendication 7, **caractérisée en ce que** l'unité de programmation (122) est configurée pour déterminer les données d'attribution (134) en fonction d'au moins une grandeur caractéristique de traitement des données.

9. Commande sécurisée selon les revendications 7 ou 8, **caractérisée en ce que** l'unité programmable (122) est configurée pour déterminer les données d'attribution (134) en fonction d'au moins une grandeur d'attribution de fonction.

10. Commande sécurisée selon l'une des revendications précédentes, **caractérisée en ce qu'**au moins une partie des données de projet (130, 132) est conservée de manière redondante dans les mémoires (52) de données de projet.

11. Commande sécurisée selon l'une des revendications précédentes, **caractérisée en ce qu'**au moins une partie des mémoires (52) de données de projet est configurée de manière à conserver de manière protégée contre les tensions nulles les données de projet (130) qui leur sont apportées.

12. Procédé de commande d'une installation automatique (10) au moyen d'une commande sécurisée (24) en fonction de données de projet (130, 132) qui représentent une application qui se déroule sur l'installation (10), la commande sécurisée (24) étant constituée de composants électroniques de commande (28, 28', 28", 28"') qui sont raccordés les uns aux autres par une unité de liaison (34), au moins une partie des composants électroniques de commande (28, 28', 28", 28"') présentant une mémoire (52) de données de projet et au moins une unité (152, 154, 156, 158) de traitement de données, les mémoires (52) de données de projet étant toutes configurées pour conserver les données de projet (130, 132) qui leur sont amenées, au moins l'un des différents composants électroniques de commande étant une unité de commande (28') configurée à redondance en canal double et possédant une première et une deuxième unité (154, 156) de traitement de données, le procédé comportant les étapes qui consistent à :
préparer des données de projet (130, 132) et
répartir au moins une partie des données de projet (130, 132) entre au moins une partie des mémoires (52) de données de projet,
des données de projet (132") définies pour la première unité (154) de traitement de données étant conservées dans une première mémoire (52) de données de projet qui est reprise dans l'unité de commande (28') qui contient la première unité (154) de traitement de données, les données de projet (132"') nécessaires pour la deuxième unité (156) de traitement de données étant conservées en mémoire dans une deuxième mémoire (52") de données de projet,
**caractérisé en ce que**
la deuxième mémoire (52") de données de projet n'est pas reprise dans l'unité de commande (28') mais dans un autre composant électronique de commande et
**en ce que** la première mémoire (52) de données de projet conserve également des données de projet qui sont nécessaires dans l'autre composant électronique de commande, les données de projet comprenant des données de programme (76, 78), des données de configuration (58, 64, 70) et/ou des données de paramétrage (80).

13. Produit de programme informatique doté d'un support de données doté de codes de programme configuré pour mettre en oeuvre un procédé selon la revendication 12 lorsque le code de programme est exécuté sur une commande sécurisée (24) selon l'une des revendications 1 à 11.
